# EUROPEAN PATENT SPECIFICATION

(11) **EP 0 846 301 B1**
(45) Date of publication and mention of the grant of the patent: **21.07.1999**
(21) Application number: 96931952.4
(22) Date of filing: 23.08.1996
(51) Int. Cl.: G06F 17/60

(54) **TOURISM INFORMATION AND RESERVATION SYSTEM AND METHOD**
VERFAHREN UND SYSTEM FÜR TOURISMUS-INFORMATION UND RESERVIERUNG
SYSTEME ET PROCEDE D'INFORMATION ET DE RESERVATION TOURISTIQUES

(30) Priority: 24.08.1995 IE 950648; 27.05.1996 IE 960370
(43) Date of publication of application: 10.06.1998
(73) Proprietor: TourIT Limited, Blackrock, Co. Dublin (IE)
(72) Inventor: Curley, Martin, Dublin 14 (IE)
(74) Representative: Hanna, Peter William Derek
(86) International application number: IE9600056
(87) International publication number: WO9708635

(56) References cited:
- WO-A-95/17733
- US-A- 5 253 165

## Description

### Field of the Invention

The present invention relates to a Tourism Information and Reservation System for distributing tourism and leisure information.

### Background Art

Currently travel and leisure information is distributed principally through brochures, books or travel agents. When one wants to book or reserve a service one must visit the travel agent or book the service by phone. Typically only the larger/chain hotels are electronically bookable.

### Summary of the Invention

The invention is set forth in the appended claims.

The Global Integrated System allows direct electronic reservation of tourism and leisure services. In particular the conversion of an electronic booking/reservation request into an automated telephone call makes all service providers electronically bookable provided they have a touchtone phone.

The system breaks the language barrier in that a user can make a booking request in his/her own native language (e.g. English) and the request is automatically translated into the native language of the requested provider (e.g. French).

The system can be applied to all destination services (e.g. golf courses, theatre, lodging etc.).

This invention concerns a new method of electronically reserving the service in real-time. Tour operators or home users or travel agents wishing to view and reserve a tourism service (such as a lodging) will interface with the system from a personal computer or other interactive device. They will be able to see multimedia information regarding a particular service, request information on the service rates and then book or reserve the service in real-time. The tourism information will be distributed to the system users on-line or through media such as CD-ROM's. Typically a user will be connected to the Tourism Information and Reservation System through a local communications connection (e.g. PSTN, ISDN, ATM, Isochronous Internet etc.) and will be connected to the system using the Internet or via on-line carriers such as Microsoft Network. The system will contain both static and dynamic information regarding a particular tourism service. When one wants to reserve a service the system will directly connect one to a reservation system for the particular service (the reservation system may be located on the systems main nodes or at the service source).

### Contrast with Existing Tourism Information and Reservation Systems

The claimed system differs from the prior art disclosed in WO-A-95/17733 essentially in that the central data processing server interface means communicates to the various goods and/or services providers via a voice data connection.

The system differs from existing tourist information and reservation systems currently used by travel agents.

A first major difference is the very easy-to-use interface. Typically a user of a Global Distribution System (GDS), such as the Trade Mark "Galileo" needs to attend a training course and needs to understand different codes to interact with the system and make reservations. The system in accordance with the present invention is very easy to use and a user requires no formal training other than to be familiar with the worldwide web interface and/or an on-line network interface such as the Microsoft network or CompuServe.

A second difference is that the system is at least an order of magnitude cheaper to connect to than the current GDSs. It is costly for both suppliers and travel agents to connect to the existing GDSs. Except for large hotel chains or resource providers it is prohibitively expensive to connect to these systems and have a resource distributed electronically. The proposed system makes it possible for even the simplest "bed and breakfast" or hostel to be connected so that their information is distributed and enables electronic reservations. Thus small business can now compete with large business.

Thirdly typically travel agents use expensive dedicated leased lines to connect to existing GDSs. The system of the invention can be accessed by a cheap local dial-up connection. Some GDSs now allow dial-up connections but to use the system special client software is required which must be copied onto the users local computer. The system of the invention requires no application specific software to run on the user's system. Users only need the standard WWW interface or interface from their local access provider.

Fourthly the system of the invention gives users control of their travel arrangements, there is no bias in the system and users can develop their own integrated itinerary and are not reliant on a travel agent to make their reservations. It makes booking of travel and tourism resources much more freely available and will be responsible for disintermediation (i.e. eliminating the travel agent in a transaction). Because the user will be directly connected to the supplier the service being sold can be offered cheaper because there is no middle man to pay.

Fifthly the system of the invention allows searches to be made by the user against certain criteria. The user can ask for all hotels in a particular price range or destination or can request a list of all restaurants within five miles of the hotel or all Italian restaurants within five miles of the hotel and can be given directions by way of map with the restaurants marked.

Sixthly the system will allow a user to look at the weather forecast for a particular destination where this option is configured on the system of the invention. This service will be updated by either local or remote weather services via a system interface.

Seventhly the system of the invention reduces the search costs and time for finding relevant tourism information. Because the user can see more information about a particular service he can make a more informed choice and purchase a service or resource which more suits his needs. With current GDS it is not possible to have high quality nested information available to a user to help him make his choice.

Eighthly, when a user is making a booking abroad he need only make a local call using his computer rather than expensive international calls.

The system of the invention simplifies and speeds up the process of booking a tourism service. It allows tourism service suppliers a new real-time distribution channel for marketing their services. It allows integration in real-time distribution channel for marketing their services. It allows integration in real-time of separate tourism services by a user into an integrated package. Its multilingual interface allows transactions to be completed seamlessly by people of different native tongues. It broadens the time and geographic reach of tourism products information and reservation.

Typically GDS's only allow bookings to the larger/chain hotels and these hotels must pay a hefty subscription for same. The system of the invention offers a better service at a much cheaper price for all accommodations.

The system allows the small supplier to perform real-time marketing of his/her service. If yields are low he/she can offer his/her resource/service at a reduced rate to ensure that the resource/service which typically has a very short shelf life is utilized. For example if a "bed and breakfast" has no bookings for a particular weekend it can change its rates to make it more attractive to customers for that specific weekend.

Information is presented in a structured manner. Using integrated/embedded guides users are first presented with a high level summary regarding a particular type of service or resource. If they require more information they can download or jump to the next level of information where more detailed information is available. Having made a decision on a particular resource or service to buy they can then automatically reserve the service. As the resource/service is selected using the mouse or keyboard an electronic reservation form is presented to them. They fill this in and send it off. This system completes the transaction and a booking confirmation is returned over a period of time.

The system at a high level can be used to control tourism flows in a particular region. Say for example in Ireland the Kerry region is full of tourists but the Donegal region is empty. The Irish tourist board, could feature the Donegal area on the system and hopefully attract more to the Donegal region.

### Contrast with Other Home Interactive Systems e.g. Home Banking

The proposed system offers an anywhere in the world service. A resource/service can be purchased anywhere in the world. The banking services provide access to an account allowing payment to other accounts which are local. The proposed system allows both booking and payment for services/resources across borders. Direct debit systems using a company bank account in each city or country allow local payments and weekly/monthly reconciliation saving on individual bank fees per transaction.

### Brief Description of the Drawings

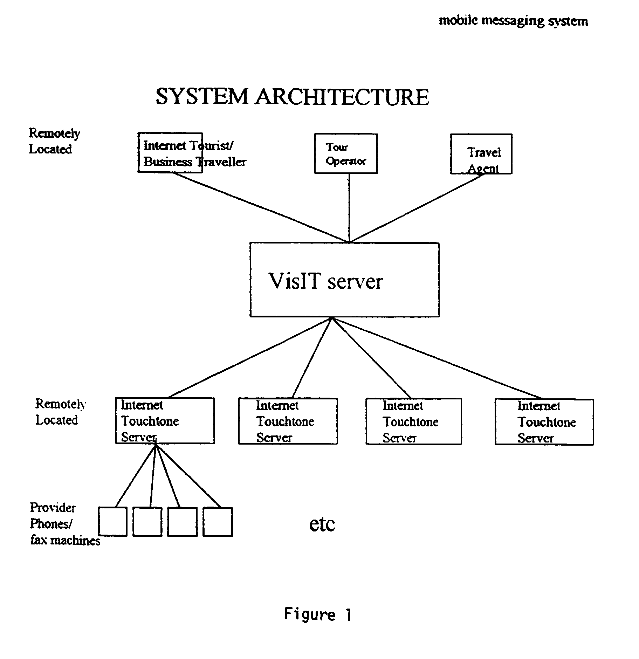

Figure 1 shows the network architecture to provide the connection of suppliers directly to customers;
Figure 2 shows the Internal Application Design;
Figures 3 to 5 show graphics screens as seen by the user, further typescript screens are shown in Appendix C; and
Figures 6 to 9 relate to Appendix A; and

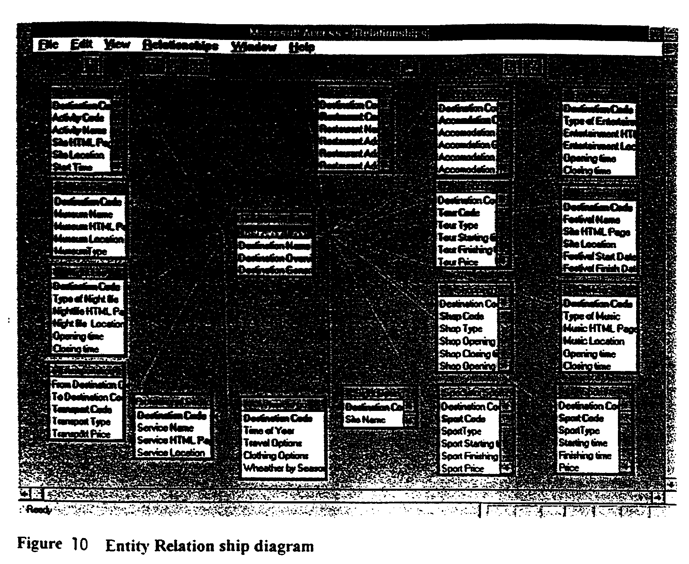

Figure 10 is an entity relationship diagram.

### Description of at least one way of carrying out the Invention by Reference to the Drawings

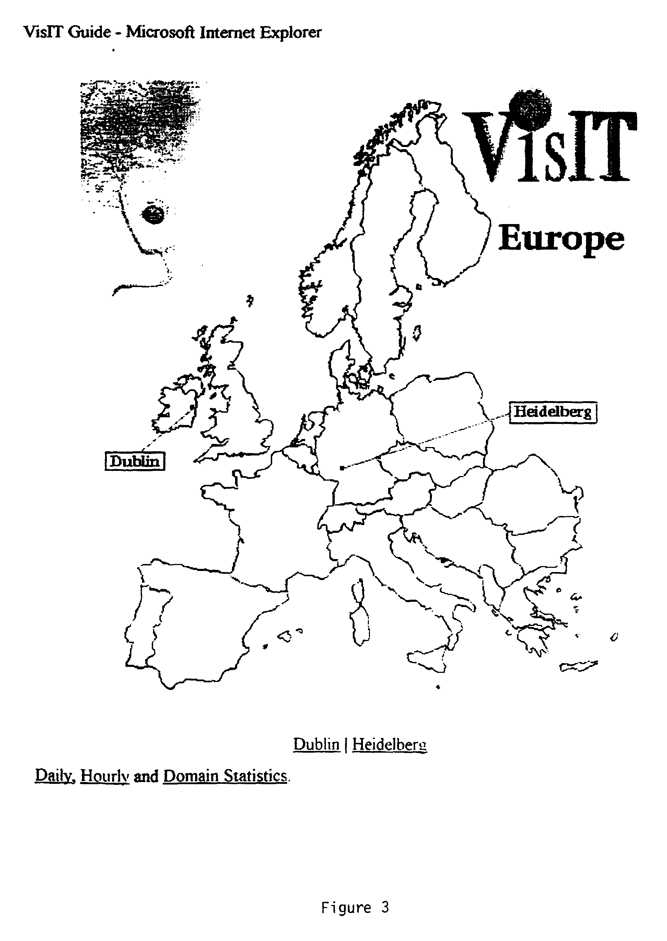

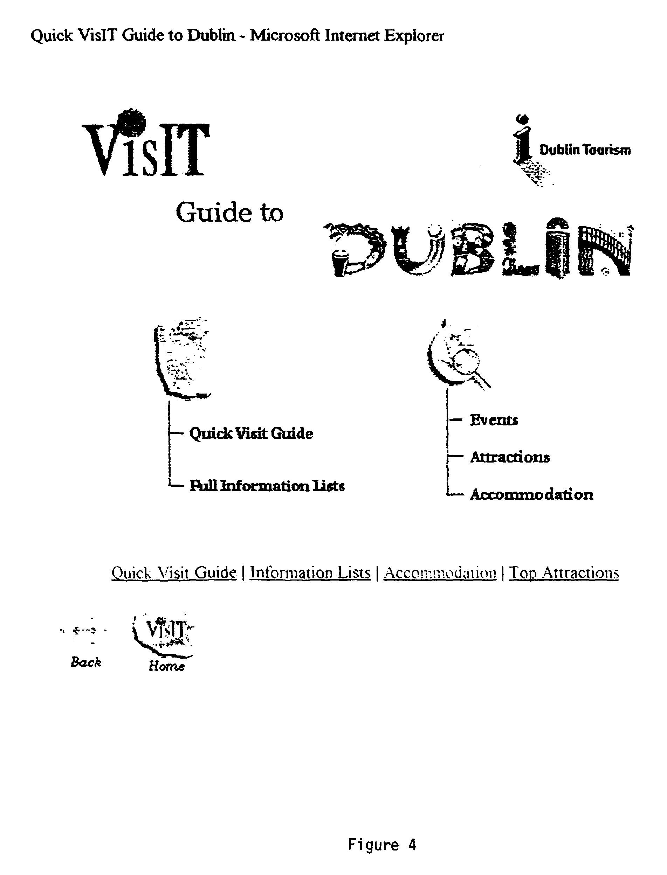

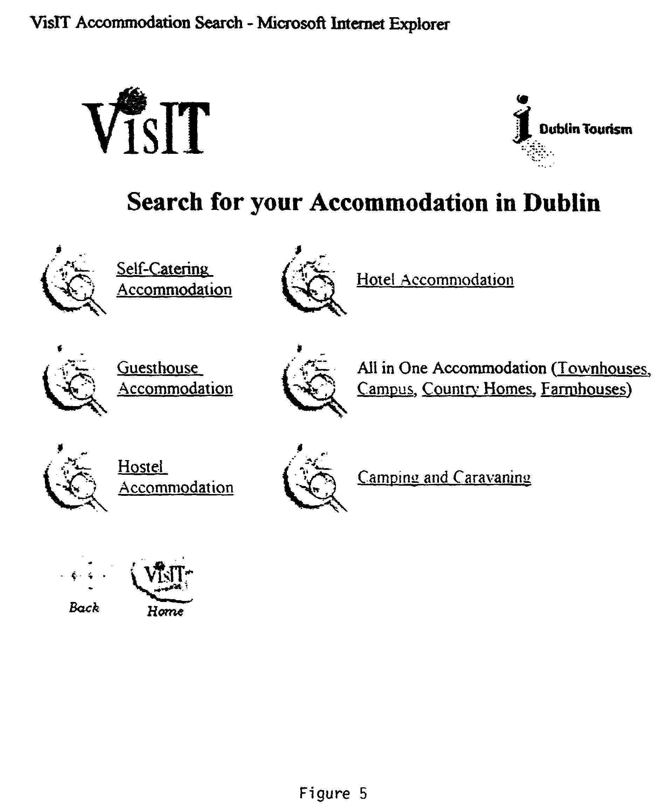

The step-by-step use of the system will now be described.
1. A user will log in from home and be able to choose a destination for which he/she wishes to obtain information. This information will be stored on a central computer which is in fact a large switch (Figure 3).
2. The user can request all sorts of data (Figures 4, 5, Appendix C, Screen 1, Appendix C, Screen 2) regarding a destination by performing search operations on the database describing a particular destination. Based on the information provided the user can make a decision to reserve a particular service.
3. To do this the user selects an activate button on the screen and an electronic form is presented to him/her (Appendix C, Screen 3).
4. After typing in the relevant details this electronic form is sent to the central computer (Appendix C, Screen 4) which then switches the message to a remote server in the requested destination using a look-up table.
5. At the remote server the electronic message is decoded and the code number and booking details for the service is identified. The telephone number of the requested service is dialled.
6. In parallel the booking information is converted into a digital voice which interacts with the person or computer picking up the phone at the service supplier.
7. If the service is available the supplier indicates this using a pre-determined code. Availability, non-availability and booking confirmation information are all conveyed through touch tone codes.
8. The remote server terminates the telephone call when the transaction is completed and then inserts the result of the transaction into the previously received electronic form which is then sent back to the central computer.
9. At the central computer the electronic form is forwarded onto the original sender. This form will contain the booking confirmation (Appendix C, Screen 5) or indicate whether the booking was successful or unsuccessful and will give the booking confirmation number if the booking was successful. A booking cancellation form is shown in Appendix C, Screen 6.
   The multilingual service will be offered by using common data tables for storing information. Translation routines will be used to offer this information in the context of different languages. Thus a user can be presented with an electronic form in his/her native language e.g. German. He/she can fill this out in German. This electronic form will be mailed to the central server where a program will extract the relevant details and send them to the remote server. The remote server will be configured to speak to the supplier in the native language of the destination. The booking request will be executed and a reply returned to the central computer. Here again a program will act on the common table and the reply for the requesting user formatter in his/her native language.

### Hardware and Software Specifications

The hardware used for a client of the Tourist Information and Reservation System could be as follows:
- 1 x: Multimedia computer
DX2 486 66Mhz / i.e. Pentium Processor
8 MB Random Access Memory (RAM)
540 MB Hard Disk
3.5" 1.44MB Floppy Disk Drive
Quad-speed CD-ROM drive
Graphics accelerator card
Sound Card and Dual external speakers
15" system Monitor
Standard Extended Keyboard
Mouse and Pad
- 1 x: Internal 14,400bps Fax modem

The software supplied for client operation of the Tourist Information and Reservation System is specified as follows:
- 1 x: Windows 95 Operating System
Windows Plus System Management
The Microsoft Network Software
Microsoft Office (includes, MS Word, MS Excel and
MS Powerpoint)
Microsoft Exchange, electronic mail management
Microsoft Fax management

Other items required are
- 1 x: Microsoft Network Account or other on-line service provider account

Typically client software may be required for travel professional use (e.g. Tour operator or travel agent). A home user or business traveller can access the system from their own PC without special client software (a www browser is sufficient).

### Application Architecture

The VisIT System is a client server based application. The VisIT system architecture is both simultaneously centralized and geographically dispersed. The VisIT data will be stored in a hybrid object oriented relational database architecture. The underlying database to be used will conform to ANSI SQL standards and may be one of the following:
- Oracle Media Server;
- Postgres;
- Microsoft SQLServer;
- Sybase SQLserver;
- Informix;
- Ingres;
- Matisse ADB
- Illustra etc.

Dynamic resource information is stored on a central relational database. VisIT utilizes the existing communications infra-structure to facilitate the rapid access and ease of maintenance of the data stored in the VisIT database by application users. The design of VisIT facilitates the integration of tourist destinations, activities and services provided not only throughout Ireland but throughout the world.

The dynamic resource data can be accessed in three ways:
1. Through a Windows based interface developed using Visual Basic and C++;
2. Through the World Wide Web using a FORMS based interface developed in HTML (Hypertext Mark-up Language); or
3. Through an on-line interface.

The system components are discussed below. The system architecture is shown in the figure below.

The software which provides information and presents electronic forms to the users resides on the central on-line server. It is created using the standard on-line tools available from on-line service providers.

### Architecture Components

- **Component name**: **Description**
- User Interface: The user interfaces with the system from their pc which connects them to the VisIT server using a network and appropriate user interface. They can find a tourism service provider by browsing or querying a database on the VisIT server. They then fill out an electronic booking request which is presented by the VisIT server.
- VisIT server: Contains destination content in a relational object oriented database (such as Postgress, Illustra, Matisse) running on a scalable server (such as Alpha or Pentium) running a multi-tasking system (eg Unix, NT). Also can contain end user interface for potential traveller or travel professional. Sends booking requests and receives booking reply from the internet touchtone server. The VisiT server sends a packet to the Internet Touchtone server detailing a booking request.
- Internet Touchtone server: Receives booking requests from the VisIT server and converts these into automated telephone calls to a tourism service provider. Receives touchtone replies from the tourism service provider in response to requests issued. Send confirmation or rejection package back to VisIT server based on provider response. Sends confirmation fax, page or mobile message to the provider if request is successful. Runs on a standard PC (eg Pentium, 486 etc) running Dos or multitasking operating system. Contains voicecard which plays previously sample voice excerpts on command. Voice excerpts are integrated to deliver coherent request to provider.
- Tourism Service provider: The tourism service provider interacts with the system using a touchtone phone. Based on a particular request they respond to the system by pressing a particular key on their touchtone phone. (eg pressing the key /one' will confirm a booking request). Confirmation of a booking can be sent by fax, page, mobile message or similar mechanism. Tourism service provers can put product availability on the system via a touchtone phone, fax, pc or other electronic mechanisms.

| **Communications** | | |
|---|---|---|
| User | VisIT server | Network, Internet, Intranet, ISDN, WWW, On-line network, frame relay, ATM etc |
| VisIT Server | Internet Touchtone server | PSTN, ISDN, Internet, X25, Frame relay, ATM etc |
| Internet Touchtone server | Tourism Service provider | PSTN, Internet, paging system, mobile messaging system |

### VisIT Database Server

The VisIT database server will be configured with the following software:
- TCP/IP, for INTERNET Access;
- The VisIT database application;
- A relational database such as SQLServer, Informix, Ingres or Postgres is recommended.

A server is also required that is configured for access to the network.

VisIT may utilise ODBC to communicate with a relational database. Theoretically, any relational database which supports ODBC could be used as the VisIT database. The minimum suggested configuration for a VisIT Server host is as follows:
OTY
- 1: Deskside PC box (expandable)
- 1: Xpress Pentium™90mHz Cpu Module (scalable)
- 4: 16 MB SIMMS Module
- 1: SCSI Cable Internal
- 1: Raid Controller (dac controller)
- 6: 2GB Seagate SCSI Disk Drives
- 1: 32 EISA Ethernet Network Card
- 7: Drive Mounts
- 1: External SCSI Cable
- 1: HP 8-Gig DAT Drive

Typically an introductory system might be a Dec Alpha 3000/300LX System with a 2GB harddrive.

This platform should be scalable to allow additional computing capacity to be added as demand grows.

### VisIT Client Software Configuration

The VisIT client PC will be configured with the following software:
- TCP/IP, to enable connecting to the database and for the INTERNET access;
- Network Browser software; and/or
- Windows Interface.

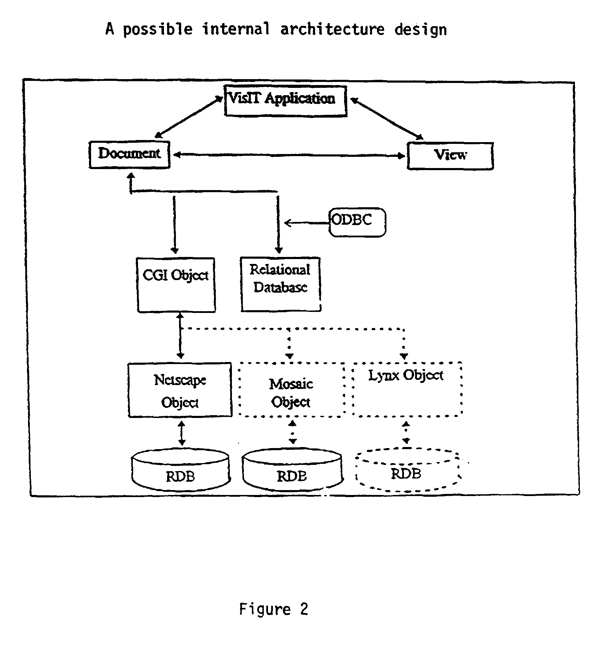

Clients that connect to VisIT through the World Wide Web (WWW) use the HTTP¹. The WWW interface is developed using HTML (Hypertext Markup Language) based forms. These forms use SQL (Structured Query Language) based queries to access the VisIT server database. WWW clients have the option to select a text or graphics based interface. The graphics based interface is slower than the text based interface as the graphics files must be downloaded to the WWW client. After the graphics files have been downloaded the application response time will increase dramatically for the remainder of the session as the graphic files will be stored locally in temporary files, which last for the duration of the user's current WWW session. Figure 2 illustrates a possible internal application design of VisIT.

The VisIT application is to be developed using the following tools:
- C++;
- Visual Basic;
- Ay relational database such as SQLServer, Informix, Oracle, Ingres, Postgres;
- HTML & CGI (Common Gateway Interface).

The development of the application using Visual Basic and C++ will facilitate the porting of the application to different platforms including future 32 bit operating systems such as Windows '95.

The central database will be access from the client PC's using ODBC & TCP/IP. Clients based on the World Wide Web will access the database server using forms created in HTML and CGI scripts stored on the WWW server. These CGI scripts are programs developed using C, SQL (Structured Query Language) calls and the SQLServer API (Application programming interface) to access the VisIT database.

The document object controls all of the data associated with VisIT and handles the interface with the different types of WWW Browsers that could be used such as Netscape, Lynx etc. The view handles all of the user interface tasks. VisIT uses the concept of polymorphism to allow additional Browser objects to be created and inserted into the application with minimal code modifications.

### External Communications

The architecture is platform independent and will run under both UNIX and Windows NT.

Users will connect to the service using a combination of either:
- PSTN
- Dedicated Phone lines;
- Leased lines;
- ISDN;
- ATM;
- Organisational INTERNET connectivity;
- Microsoft Service Network or other on-line service

Users will connect to the VisIT system at a variety of speeds varying from 2,400 baud dialup connectivity to 45 Mbps ATM connectivity. Users will utilise common network browser software to access the system such as those provided by:
- Netscape;
- Compuserve;
   America On-Line;
- Microsoft network;
- or other on-line network.

### Network Architecture for On-Line Service

An on-line network such as the Microsoft network can be implemented using a central database and a network of high capacity switches such as the Digital Gigaswitch product which has a capacity of 3.6 Gbytes per second. The gigaswitches are implemented using high speed ATM connections. Local connections to the network can be through PSTN line supporting speeds such as 14,400 bps or through other connections such as ISDN. The central computer could be a Digital alpha 8,400 server or scalable Pentium server.

### Addendum to Reservation System

As well as having a touchtone interface to the suppliers the remote server can be configured to either be located at the suppliers premises or to connect to another computer of similar specification at the suppliers. This would enable all information and reservation transactions to be implemented using a PC interface. Thus there are a number of hybrid configuration for connection to the supplier. In summary these are:
Remote server interfaces with supplier using telephone touchtone interface
Remote server interfaces with supplier's PC using internet or a dialup connection
Remote server is actually at supplier's premises
Remote server interogates supplier's PC using an ODBC interface
Supplier information is held on the central server and the supplier logs onto the central server to update this information
Remote interface is part of an integrated resource management system such as a hotel management system which allows remote bookings of servers.

### Appendix A

The Appendix gives a more detailed description of a system model specification.

### Appendix B

The Appendix gives an example of a Booking Packet Specification.

### Appendix C

The Appendix shows certain screens which are in typescript.

### APPENDIX A

### VIsIT Server Database Specification

**Table Of Contents**

| **1. INTRODUCTION** |
|---|
| **2. SYSTEM MODEL SPECIFICATION** |
| **2.1 SYSTEM HIERARCHY** |
| **2.2 THE WELCOME PAGE** |
| **2.3 DESTINATION SELECTION** |
| **2.4 ACTIVITIES** |
| **2.5 ACTIVITY SELECTED** |
| **2.6 THE DATA FLOW** |
| **2.7 THE REQUIRED INPUTS AND OUTPUTS BASED ON THE ACTIVITY SELECTED** |
| **3.0 ENTITY LISTING** |
| **4.0 INITIAL MANAGEMENT INTERFACE REQUIREMENTS** |
| **APPENDIX A: DATABASE DEFINITION** |

**Table Of Figures**

| |
|---|
| **FIGURE 1. SYSTEM HIERARCHY.** |
| **FIGURE 2 WELCOME SCREEN.** |
| **FIGURE 3 SELECT DESTINATION SCREEN.** |
| **FIGURE 4 ACTIVTTY SELECTION SCREEN.** |
| **FIGURE 5 ENTITY RELATION SHIP DIAGRAM** |

### 1. Introduction

This document defines:
- The system hierarchy (including the hidden data necessary to be passed in this version);
- The format of the Internet based html screens;
- The Activity based inputs and outputs;
- The Entities;
- The Management Interface.

### 2. System Model Specification

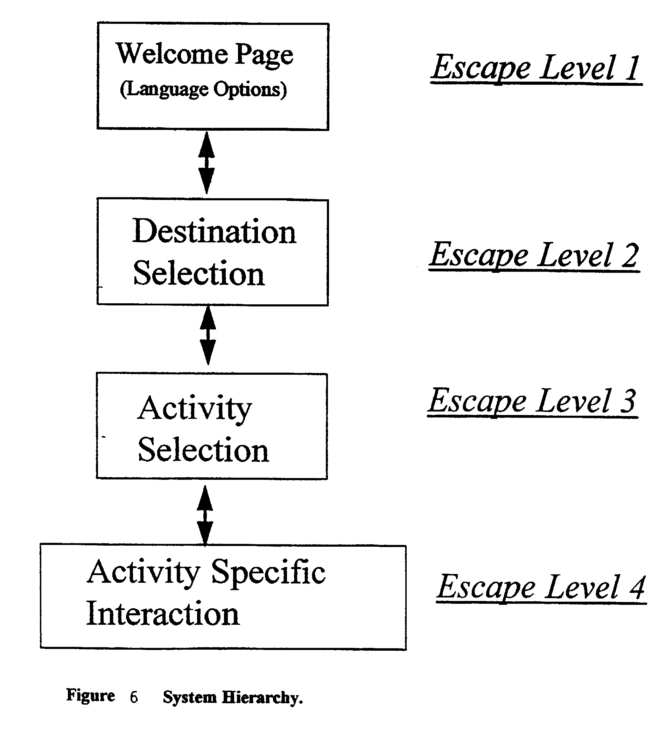

### 2.1 System Hierarchy (Figure 6)

The configuration of the TourIT web site to be able to cope with multiple languages is a key part of the wide spread acceptance of the application by users. The users on the Main Welcome screen are able to select their preferred language option. The TourIT web site must also be able to cope with text based browsers.

There are a number of levels in the system as defined in Figure 6. At each level in the system specific push button icon options will be available to the user underneath the TourIT web site logo.

The following Key Icons will be displayed on all screens as appropriate below level 2:
1. Sightseeing,
2. Accommodation,
3. Restaurants,
4. Nightlife,
5. Transport,
6. Entertainment,
7. Comments,
8. To form for additions to the database

The first six options will enable the user to select the appropriate activity based on the destination selected. Option 7 enables the user to enter a comment that will be automatically Emailed to the TourIT web site managers. Option 8 is used by all forms of service that we offer reservations for, and allows hotels etc. to request addition to the database

As well as these icons the following Escape options should also be available at the different levels through out the TourIT web site options:
Level 1. None
Level 2. Change language[goto welcome page]
Level 3. Level 2 + change location[goto map page]
Level 4. Level 3 + change activity[goto activities page]
Level 5. Level 4 + page dependency (e.g. electronic forms)

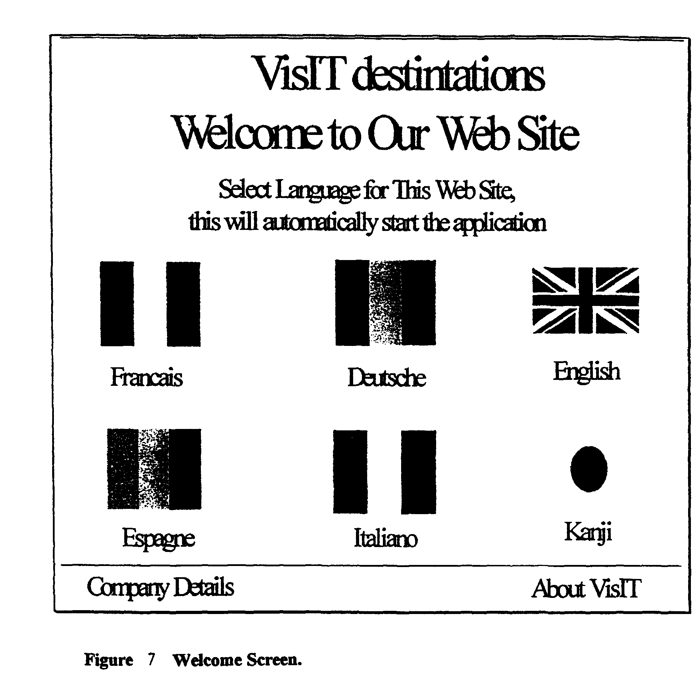

### 2.2 The Welcome Page (Figure 7 )

This page references the company details home page and it also references the TourIT web site details home page. The user selects a particular language and this then starts the application.

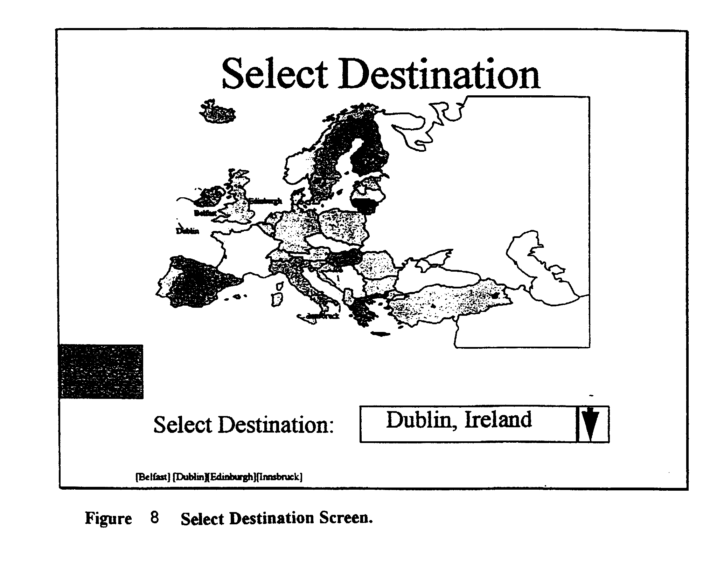

### 2.3 Destination Selection (Figure 8)

This page will offer the first level of destinational hierarchy. This may be expanded as the service is expanded, but a limit of three levels will be placed to avoid a user getting frustrated.

This page will also include a text based option to select destination, using a editable pull down box.

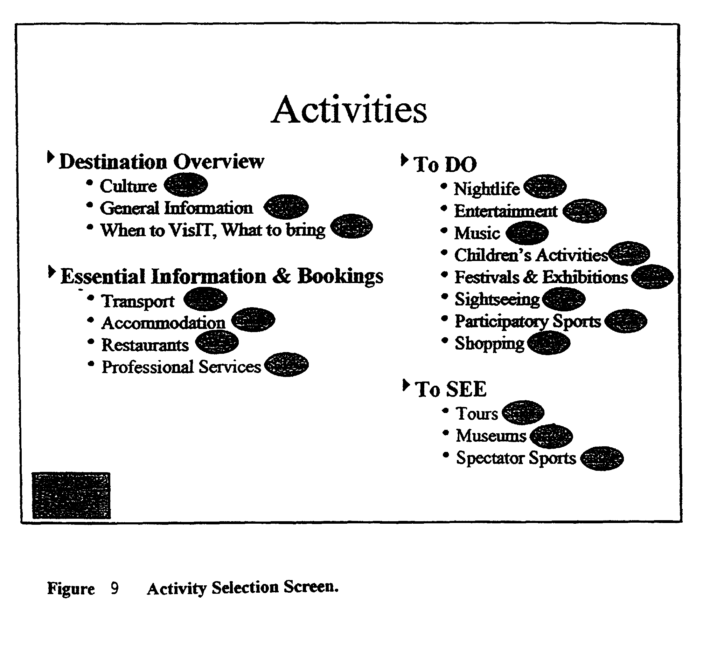

### 2.4 Activities (Figure 9)

This page will offer a menu of activities subdivided as can be seen in Figure 9. These could also be listed in columnar fashion for that destination, using both standard TourIT icons (to be supplied), and text based linking.

### 2.5 Activity Selected

Based on the activity selected a number of possible options can be selected. The following sections, The *Data flow section & The Required Inputs and Outputs based on the Activity Selected section* document the dataflows and the required inputs and outputs.

### 2.6 The Data Flow

All of the data passed into and out of the following pages are hidden data. Where the next step is defined as *"? Potential for bookings".* This a place holder for a future option to make a reservation.

| **The Top Levels:** | | | | | |
|---|---|---|---|---|---|
| **Title -** | **Entry** | **Next Step** | **Escape** Options | **Data Passed** into | **Data Passed out** |
| Welcome | URL | Map | Level 1 | None | Language |
| Map | Welcome | Activities | Level 2 | Language | language, location |
| Activities | Map | Activity Selection | Level 3 | language, location | language, location |

| **The Activity Selections:** | | | | |
|---|---|---|---|---|
| **Title** | **Entry** | **Next Step** | **Escape Options** | **Data Passed** |
| Destination Overview | Activities page | Key Icons | Level 4 | language, location |
| **Destination Overview (button on activities page, with key ICONS included)** atmosphere, architecture, history, differentiating features, must do's | | | | |

| **Title** | **Entry** | **Next Step** | **Escape Options** | **Data Passed into** | **Data Passed out** |
|---|---|---|---|---|---|
| Transport | Activities, Destination overview | Transport List | Level 4 | language, location | language, location |
| Transport List | Transport | Transport Details | Level 4 + Transport | language, location | language, location |
| Transport Details | Transport List | Booking Details | Level 4 + Transport + 'click back' | language, location | language, location, relevant transport details |
| Booking Options | Transport Details | ? Potential for bookings | Level 4 + Transport + 'click back' | language, location, type of transport | |
| **Transport** Airport info., ferry info., bus, tram, train, taxi and car rental current rates | | | | | |

| **Title** | **Entry** | **Next Step** | **Escape Options** | **Data Passed** |
|---|---|---|---|---|
| General Info. | Activities | None | Level 4 | language, location |
| General information Overview, post, telephone, banks and currency, time/hours, holidays | | | | |

| **Title** | **Entry** | **Next Step** | **Escape Options** | **Data Passed** |
|---|---|---|---|---|
| Sightseeing. | Activities, Destination Overview | None | Level 4 | language, location |
| **Sightseeing** Top attractions | | | | |

| **Title** | **Entry** | **Next Step** | **Escape Options** | **Data Passed** |
|---|---|---|---|---|
| Tours | Activities | ? Potential for bookings | Level 4 | language, location |
| **Tours** Local Tours, day trips, overnight excursions | | | | |

| **Title** | **Entry** | **Next Step** | **Escape Options** | **Data Passed** |
|---|---|---|---|---|
| Entertainment | Activities, Destination overview | ? Potential for booking | Level 4 | language, location |
| **Entertainment** Theatre, Musicals, Comedy, Dance | | | | |

| **Title** | **Entry** | **Next Step** | **Escape Options** | **Data Passed** |
|---|---|---|---|---|
| Music | Activities | None | Level 4 | language, location |
| **Music** Traditional, local, Classical, Pop, Opera, Jazz and Blues, Rock | | | | |

| **Title** | **Entry** | **Next Step** | **Escape Options** | **Data Passed** |
|---|---|---|---|---|
| Shopping | Activities | None | Level 4 | language, location |
| **Shopping** Areas and specialty/special value products | | | | |

| **Title** | **Entry** | **Next Step** | **Escape Options** | **Data Passed** |
|---|---|---|---|---|
| Museums | Activities | None | Level 4 | language, location |
| **Museums** Types | | | | |

| **Title** | **Entry** | **Next Step** | **Escape Options** | **Data Passed** |
|---|---|---|---|---|
| | | | | |

| **Title** | **Entry** | **Next Step** | **Escape Options** | **Data Passed in** | **Data Passed out** |
|---|---|---|---|---|---|
| Accommodation (transport, multiple categories, location, price) | Activities, Destination Overview | Accommodation List | Level 4 | language, location | language, location |
| Accommodation List (database output) | Accommodation | Accommodation Details | Level 4 + Accommodation | language, location | language, location |
| Accommodation Details | Accommodation List | Booking Forms | Level 4 + Accommodation + 'click back to go back to list' | language, location | language, location, relevant accomm. details |
| Booking Forms | Accommodation ? Details | Potential for bookings | Level 4 + Accommodation + 'click back' | language, location, relevant accomm. details | |
| **Accommodation (pass hotel selection into form)** Hotel lists - what you will pay for what type of hotel | | | | | |

| **Title** | **Entry** | **Next Step** | **Escape Options** | **Data Passed into** | **Data Passed out** |
|---|---|---|---|---|---|
| Restaurants (multiple food types - location) | Activities, Destination Overview | Restaurant List | Level 4 | language, location | language, location |
| Restaurant List | Restaurants | Restaurant Details | Level 4 + Restaurants | language, location | language, location |
| Restaurant Details | Restaurant List | None | Level 4 + Restaurants + 'click back' | language, location | None |
| Children's Activities | Activities | None | Level 4 | language, location | |
| **Children's activities** Events, attractions | | | | | |

| **Title** | **Entry** | **Next Step** | **Escape Options** | **Data Passed** |
|---|---|---|---|---|
| Tours | Activities | ? Potential for Booking | Level 4 | language, location |
| **Festivals & Exhibitions** | | | | |

| **Title** | **Entry** | **Next Step** | **Escape Options** | **Data Passed** |
|---|---|---|---|---|
| Spectator Sports | Activities | ? Potential for booking | Level 4 | language, location |
| **Spectator sports** List categories | | | | |

| **Title** | **Entry** | **Next Step** | **Escape Options** | **Data Passed** |
|---|---|---|---|---|
| Activity Sports | Activities | None | Level 4 | language, location |
| **Activity Sports** Golf, fishing etc. | | | | |

| Title | Entry | Next Step | Escape Options | Data Passed |
|---|---|---|---|---|
| When to go, what to bring | Activities | None | Level 4 | language, location |
| **When to go/ What to bring** Climate, type of clothes | | | | |

### Restaurants

List of Types (Family, budget, cafes, Local cuisine, local specialties, European cuisine, ethnic cuisine, American cuisine) - what you will pay for a meal

| **Title** | **Entry** | **Next Step** | **Escape Options** | **Data Passed into** | **Data Passed out** |
|---|---|---|---|---|---|
| Professional Services (multiple types) | Activities | Prof. Services List | Level 4 | language, location | language, location |
| Prof. Services List | Professional Services | None | Level 4 + Professional Services | language, location | None |
| **Professional services** Secretarial services, fax, overnight mail, messenger services, translation services, mobile phone and computer rentals | | | | | |

| **Tittle** | **Entry** | **Next Step** | **Escape Options** | **Data Passed into** | **Data Passed out** |
|---|---|---|---|---|---|
| Nightlife (multiple types, location, added facilities (rest./ hours/hotel/ etc.)) | Activities, Destination Overview | Nightlife List | Level 4 | language, location | language, location |
| Nightlife List | Nightlife | Nightlife Details | Level 4 + Nightlife | language, location | language, location |
| Nightlife Details | Nightlife List | None | Level 4 + Nightlife + 'click back' | language, location | None |
| **Nightlife** Pubs, clubs, casino, comedy | | | | | |

### 2.7 The Required Inputs and Outputs based on the Activity Selected

The section defines the required inputs and outputs for each page at each level of the TourIT web site hierarchy. All input/output in italics is hidden. The Input Requirements column defines the relevant fields for query construction. The Output Requirements column defines the relevant fields for display as a result ofthe query.

Each of the query option should contain an option to restrict the size of the matching result set, i.e. this determines whether or not 10, 25, 50, 100, 500 values are returned from the query. A default value should be preselected (probably 25). Preformatted output implies a previously created HTML based document that matches that search criteria.

Each of the Output Pages resulting from a query should take the following format:
- VisIT header on every page - includes logo + page title + Location + Language (e.g. VisIT transport booking -- Dublin, English)
- 8 main routing icons
- The Escape Options
- Multi - coloured divider line
- The Specific Results of the query in a left justified bulleted list or a number of columns. The choice here is dependant on the ease of viewing and use.
- Multi - coloured divider line
- Options (both routing icons and escape options) repeated at bottom of screen.

| **Title** | **Input requirements (Query fields)** | **Output Requirements** |
|---|---|---|
| Welcome | Language Options | *Language* |
| Map | *Language* Location (map & text) | *Language* *Location* |
| Activities | *Language* *Location* Activity Icons (and text) [tabulate graphics and text separately] | *Language* *Location* |
| Destination Overview | *Language* | *Language* |
| | *Location* | *Location* |
| | Table of Contents, same page pointers <#Name> | Preformatted output |
| Transport | *Language* | *Language* |
| | *Location* | *Location* |
| | Type (multiple select) | Transport List (clickable) Carrier |
| | City/Country departing | |
| | from | |
| | Date of Departure | |
| | Desired Departure Time (AM, Afternoon, PM, ALL) | |
| | Date of Return | |
| | Desired Return Time (AM, Afternoon, PM, ALL) | |
| | Price Range | |
| Transport List | *Language* | *Language* |
| | *Location* | *Location* |
| | User Selection | Transport Details |
| | | Carrier Details |
| | | Graphics |
| | | Times |
| | | Cost |
| Transport Details (clickable) (clickable) | *Language* | *Language* |
| | *Location Transport* | *Location* |
| | *Code* Carrier Details | *Transport Code* |
| | Graphics | |
| | Times | |
| | Cost | |
| Booking Options | *Language* | *Language* |
| | *Location* | *Location* |
| | *Transport Code* | Confirmation Details |
| | Reprint Transport Details | Transport Details |
| | Credit Card Info. | Booking Reference |
| | Number | Contact Name |
| | Name | |
| | Expiration | |
| | Billing Address | |
| General Info. | *Language* | *Language* |
| | *Location* | *Location* Preformatted output |
| | Table of Contents, same page pointers | |
| Sightseeing. | *Language* | *Language* |
| | *Location* | *Location* |
| | Table of Contents | Preformatted Output |
| Tours | *Language* | *Language* |
| | *Location* | *Location* |
| | Type Length oftour | Tour Information |
| Entertainment | *Language* | *Language* |
| | *Location* | *Location* |
| | Table of Contents | Preformatted output |
| Music | *Language* | *Language* |
| | *Location* | *Location* |
| | Table of Contents | Preformatted output |
| Shopping | *Language* | *Language* |
| | *Location* | *Location* |
| | Table of Contents | Preformatted output |
| Museums | *Language* | *Language* |
| | *Location* | *Location* |
| | Table of Contents | Preformatted output |
| Children's Activities | *Language* | *Language* |
| | *Location* | *Location* |
| | Table of Contents | Preformatted output |
| Spectator Sports | *Language* | *Language* |
| | *Location* | *Location* |
| | Table of Contents | Preformatted output |
| Activity Sports | *Language* | *Language* |
| | *Location* | *Location* |
| | Table of Contents | Preformatted output |
| When to go, what to bring | *Language* | *Language* |
| | *Location* | *Location* |
| | Table of Contents, same page pointers | Preformatted output |
| Accommodation | *Language* | *Language* |
| | *Location* | *Location* |
| | Multiple Types | Accommodation list |
| | Accessibility (transport type) | |
| | Room options | |
| | Location | |
| | Price | |
| | Facilities | |
| Accommodation List | *Language* | *Language* |
| | *Location* | *Location* |
| | User Selection | Accommodation Details |
| | | Type |
| | | Location |
| | | Price |
| | | Price qualifications Availability |
| Accommodation | *Language* | *Language* |
| Details (clickable) | *Location* | *Location Accommodation Code* |
| | Accommodation Code | |
| | Type | |
| | Location | |
| | Price | |
| | Availability | |
| Booking Forms | *Language* | *Language* |
| | *Location* | *Location* |
| | Reprint Accommodation | Confirmation Details |
| | Details | Transport Details |
| | Credit Card Info. | Booking Reference |
| | Number | Contact Name |
| | Name | |
| | Expiration | |
| | Billing Address | |
| Restaurants | *Language* | *Language* |
| | *Location* | *Location* |
| | Multiple Cuisine Type | Restaurant list |
| | Location (key spots/hotels) | Name |
| | | Location |
| Restaurant List | *Language* | *Language* |
| (clickable) | *Location* | *Location* |
| | User Selection | Restaurant Details |
| | | Name |
| | | Location |
| | | Grading |
| | | Cuisine |
| | | Other Amenities |
| Restaurant Details | *Language* | *Language* |
| | *Location* | *Location* |
| | Preformatted Output | None |
| Professional Services | *Language* | *Language* |
| | *Location* | *Location* |
| | Multiple Types | Prof. Services List |
| | | Type |
| | | Location |
| Prof. Services List | *Language* | *Language* |
| (clickable) | *Location* | *Location* |
| | User Selection | Prof. Service Selected |
| Prof. Services Details | *Language* | *Language* |
| | *Location* | *Location* |
| | Preformatted Output | None |
| Nightlife | *Language* | *Language* |
| | *LocatioN* | *Location* |
| | Multiple Type | Nightlife List |
| | Location | |
| | Other facilities | |
| Nightlife List (clickable) | *Language* | *Language* |
| | *Location* | *Location* |
| | User Selection | *Location* |
| Nightlife Details | *Language* | *Language* |
| | *Location* | *Location* |
| | Preformatted Output | None |

### 3.0 Entity listing

The following entities are required to be defined. Some of these entities could be merged together if required. A high level ERD is showed in Figure 5.
**1/ Destination Overview**
   atmosphere, architecture, history, differentiating features, must do's
**2/ Accommodation**
   Hotel lists - what you will pay for what type of hotel
**3/Restaurants**
   List of Types (Family, budget, cafes, Local cuisine, local specialties, European cuisine, ethnic cuisine, American cuisine) - what you will pay for a meal
**4/ Transport**
   Airport inf., ferry info., bus, tram, train, taxi and car rental -current rates
**5/ General information**
   Overview, post, telephone, banks and currency, time/hours, holidays
**6/Professional services**
   Secretarial services, fax, overnight mail, messenger services, translation services,
   mobile phone and computer rentals
**7/Sightseeing**
   Top attractions
**8/ Tours**
   Local Tours, day trips, overnight excursions
**9/Nightlife**
   pubs, clubs, casino, comedy
**10/Entertainment**
   Theatre, Musicals, Comedy, Dance
**11/Musik**
   Traditional, local, Classical, Pop, Opera, Jazz and Blues, Rock
**12/ Shopping**
   areas and specialty/special value products
**13/Museums**
   types
**14/Children's activities**
   Events, attractions
**15/ Festivals & Exhibitions**
**16/ Spectator sports**
   list categories
**17/ Sports**
   golf, fishing etc.
**18/ When to go/ What to bring**
   climate, type of clothes

### 4.0 Initial Management Interface Requirements

A management interface must be developed to maintain the above entities. The following functionality is required:
- General data management (i.e. addition and deletion of hotels, timetable adjustments etc.) to be done mainly by TourIT Ltd.
- Hotel Group Management (i.e. where a hotel group can add it's own hotels within that group - password protected)
- Ability to monitor all adjustments to the database (i.e. reports) by TourIT Ltd.
- Provision of Server Statisitics as demonstrated in initial meeting

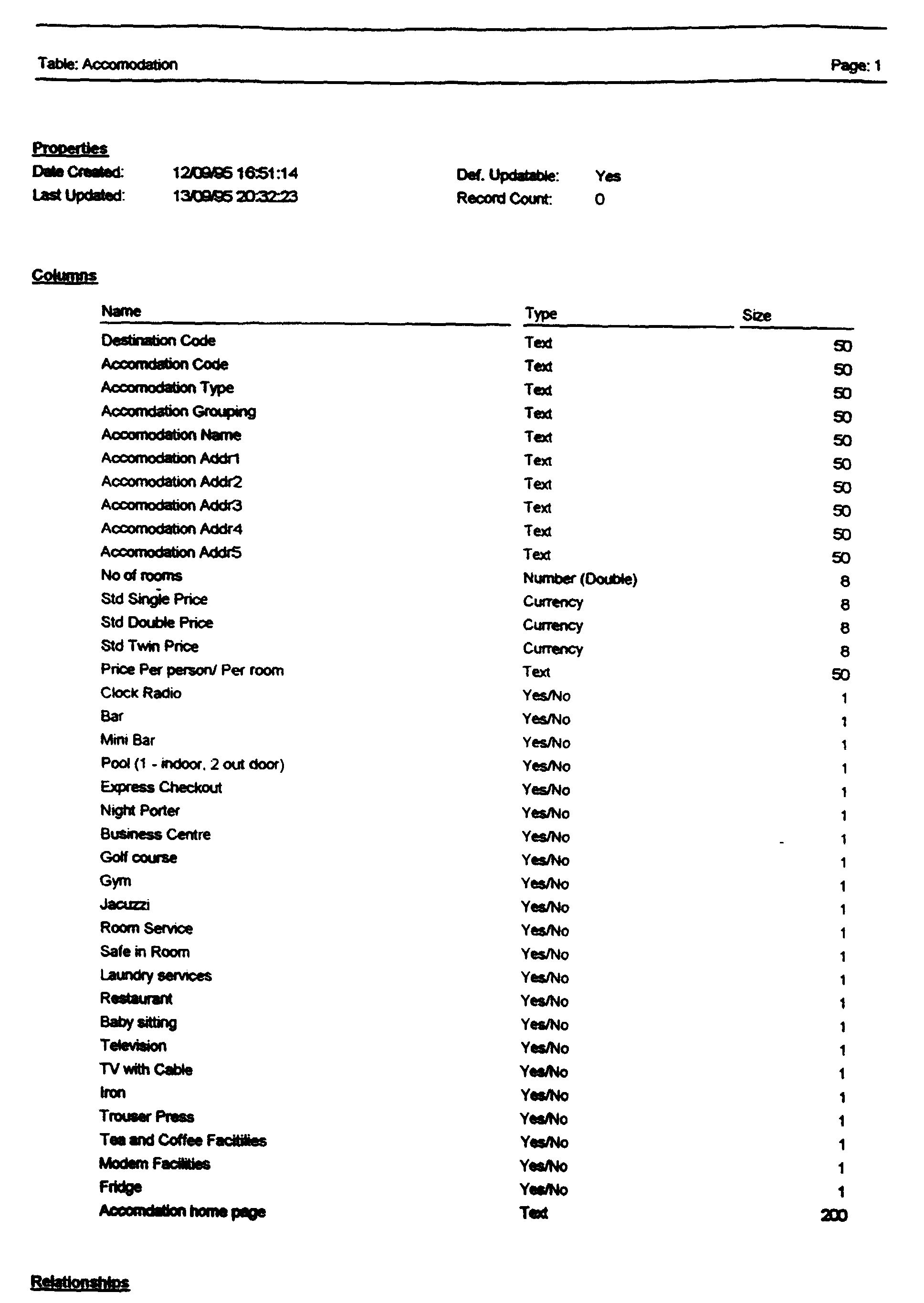

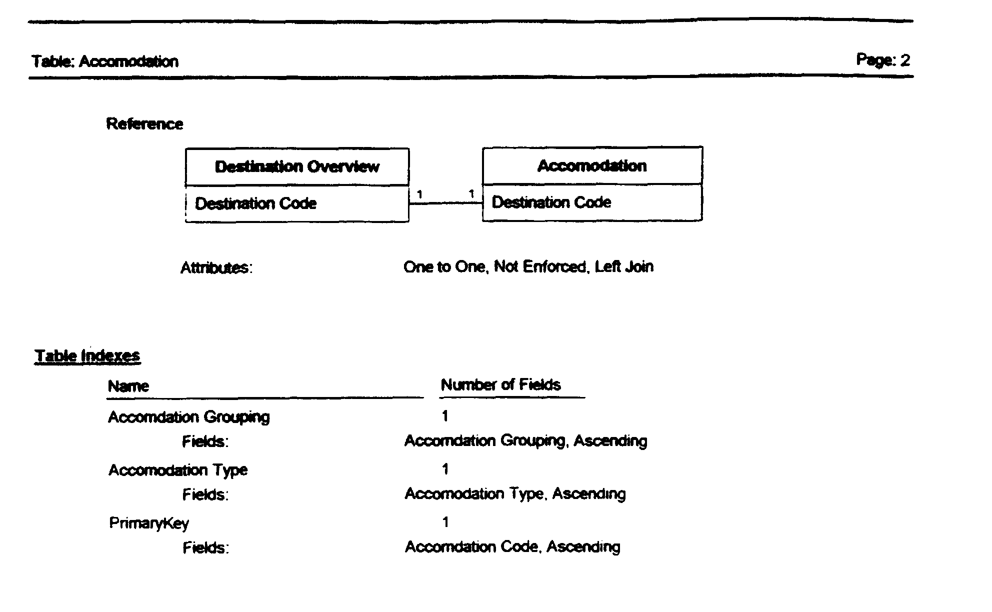

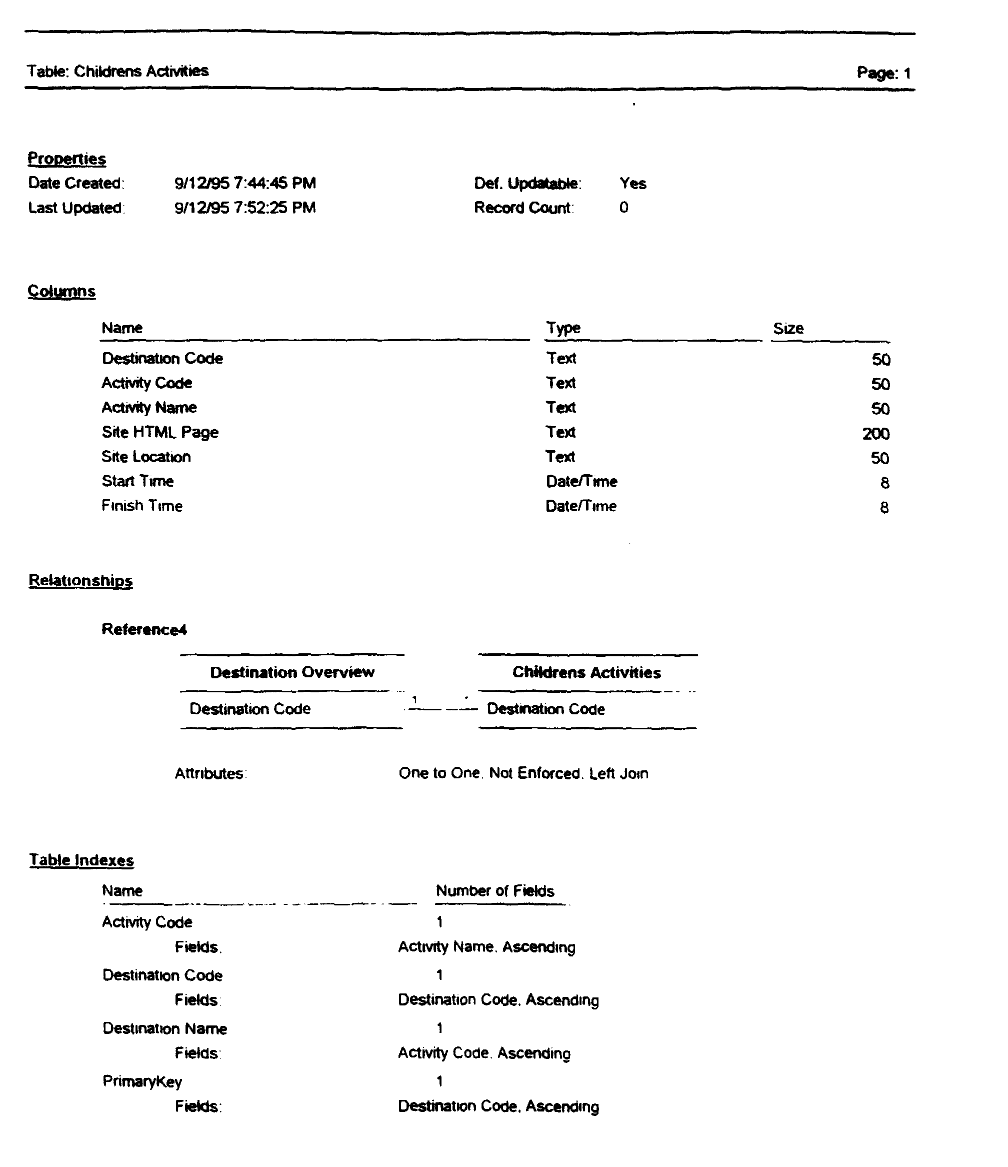

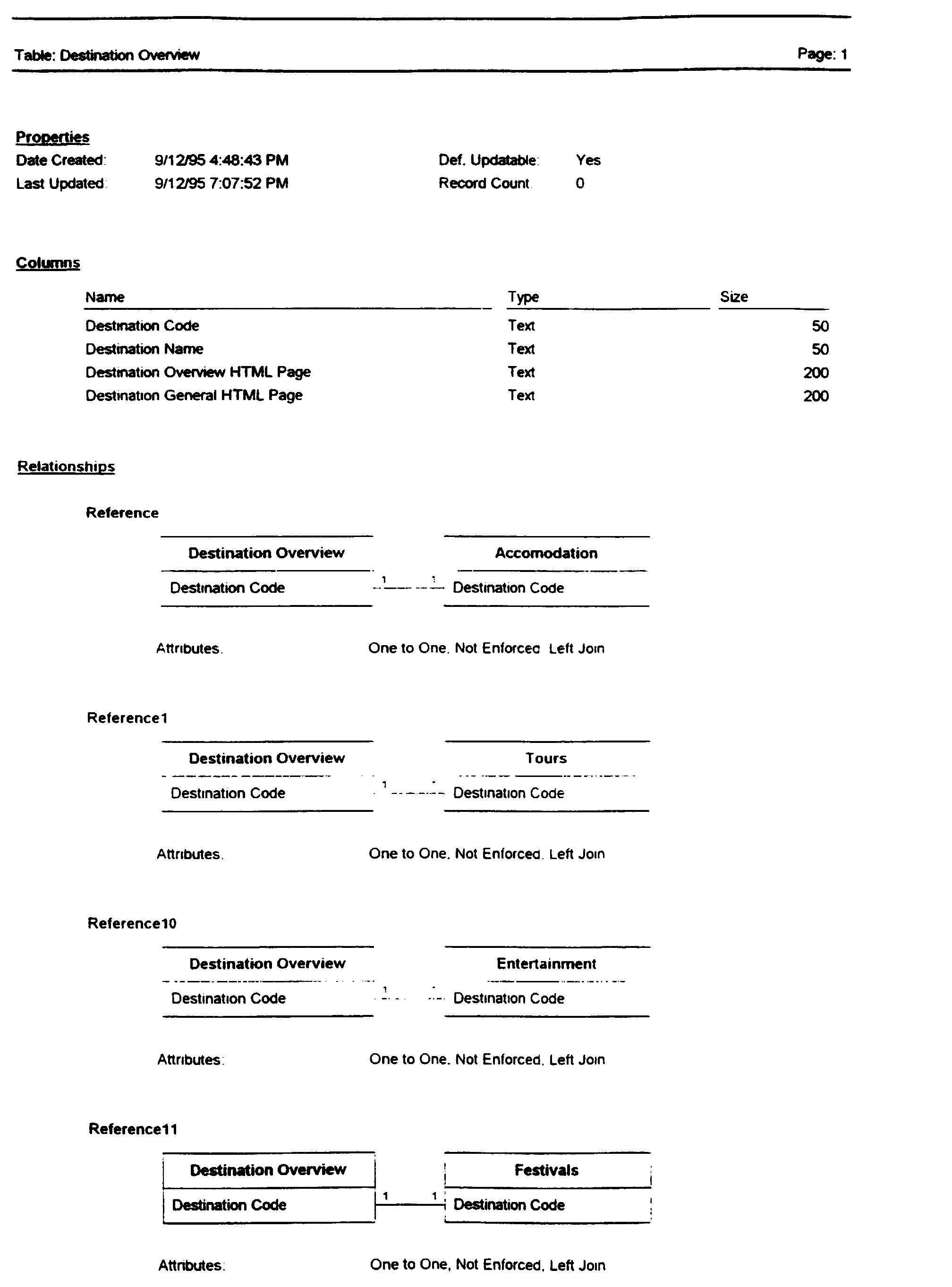

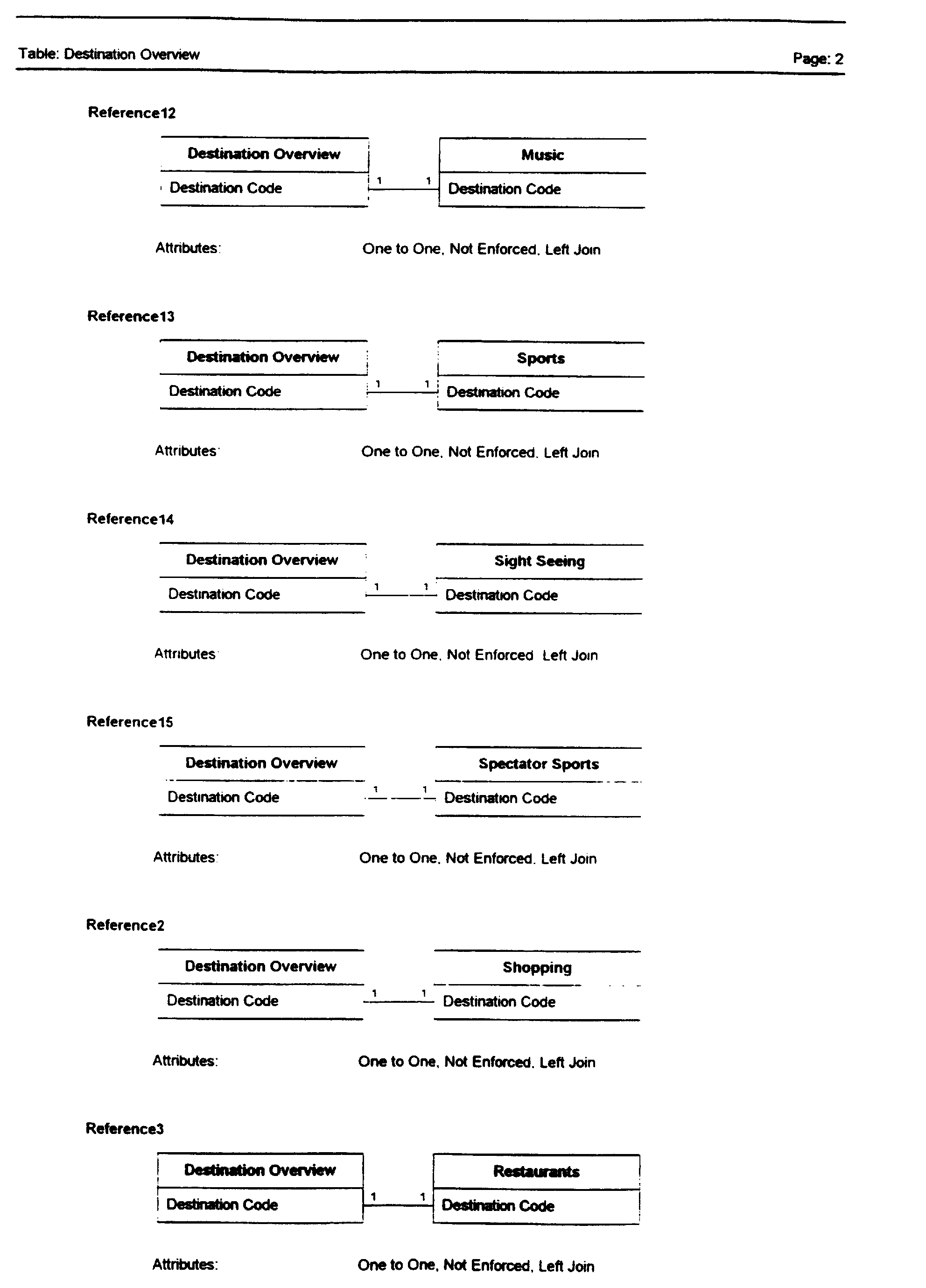

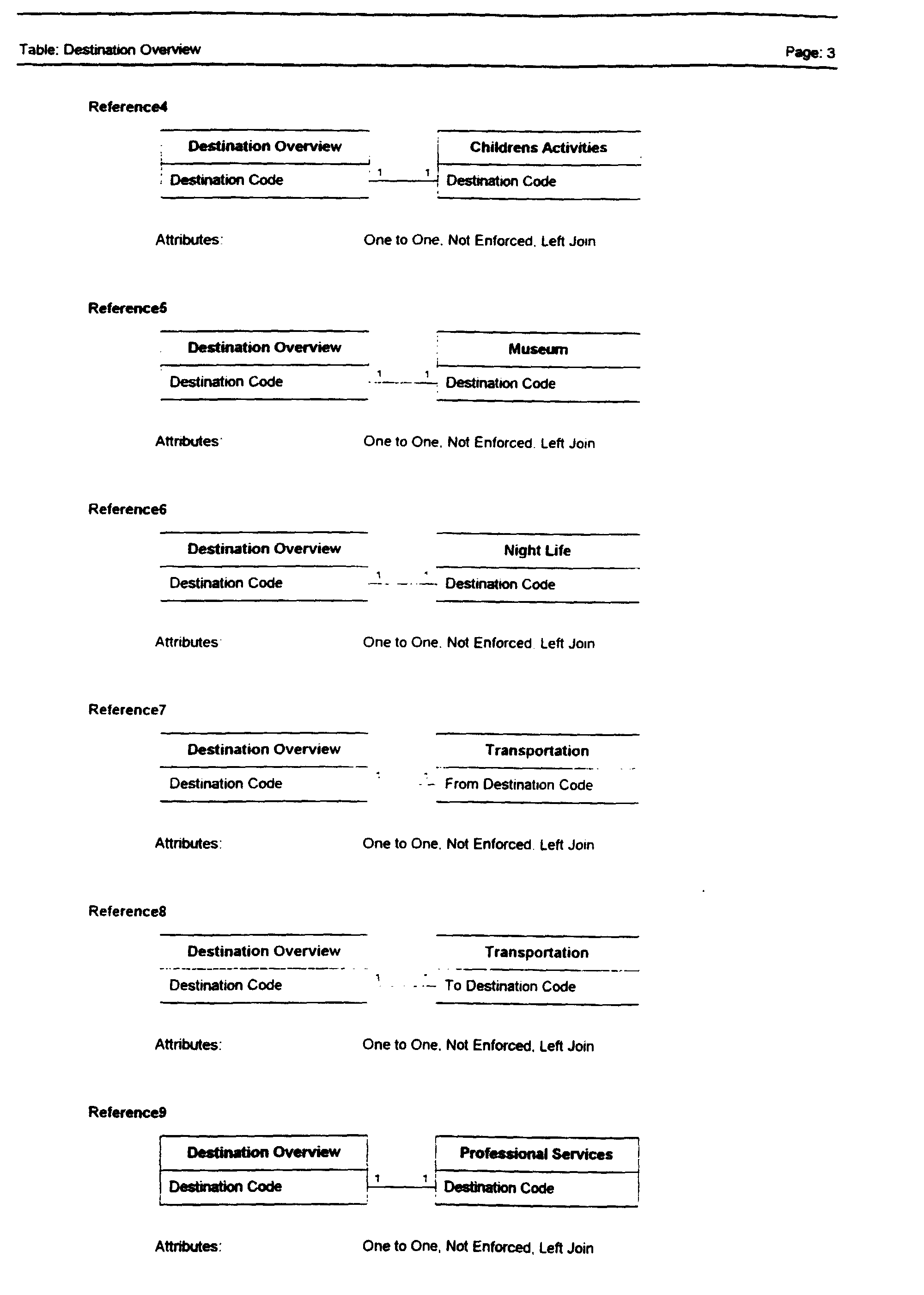

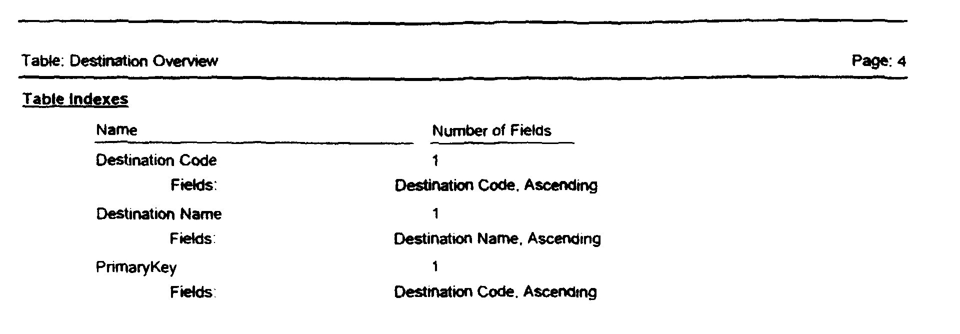

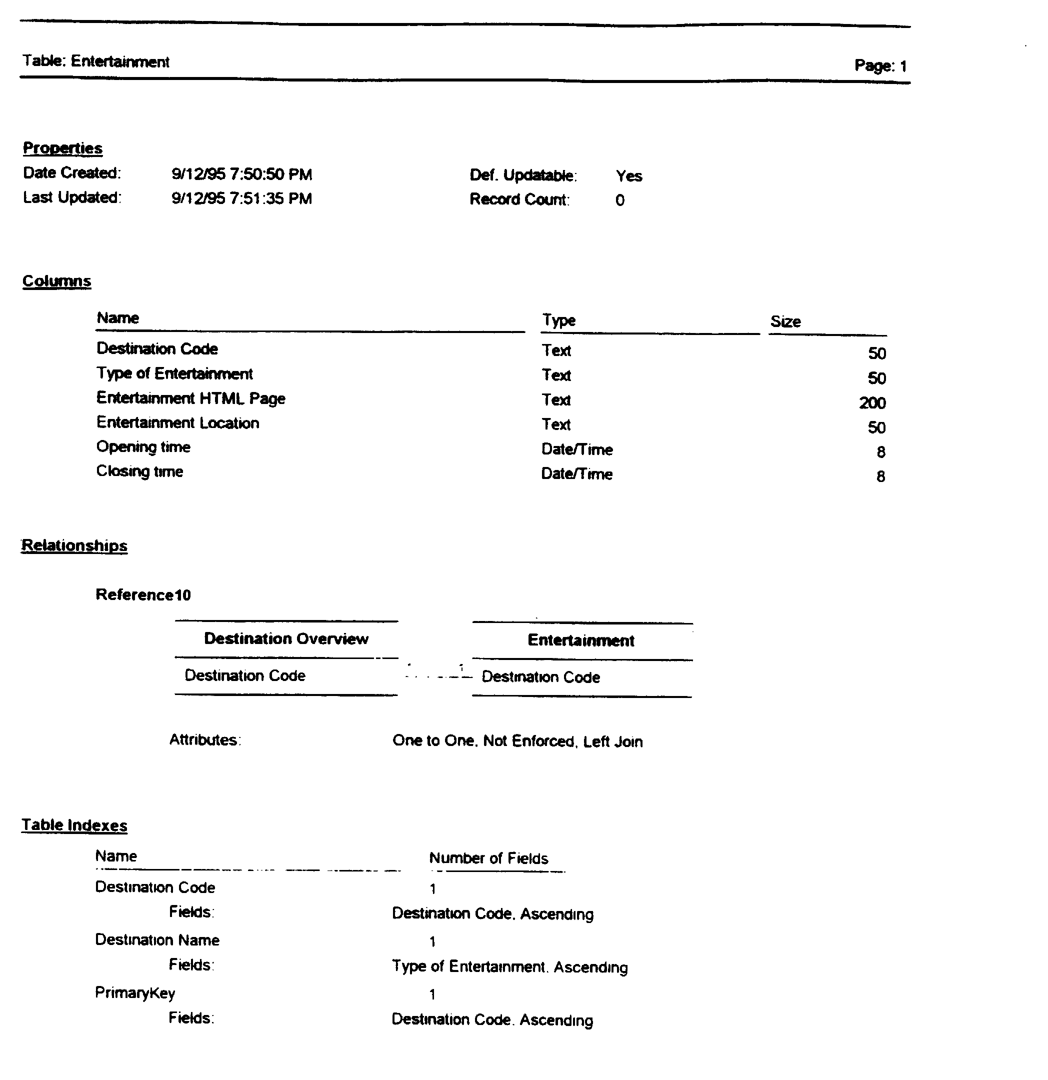

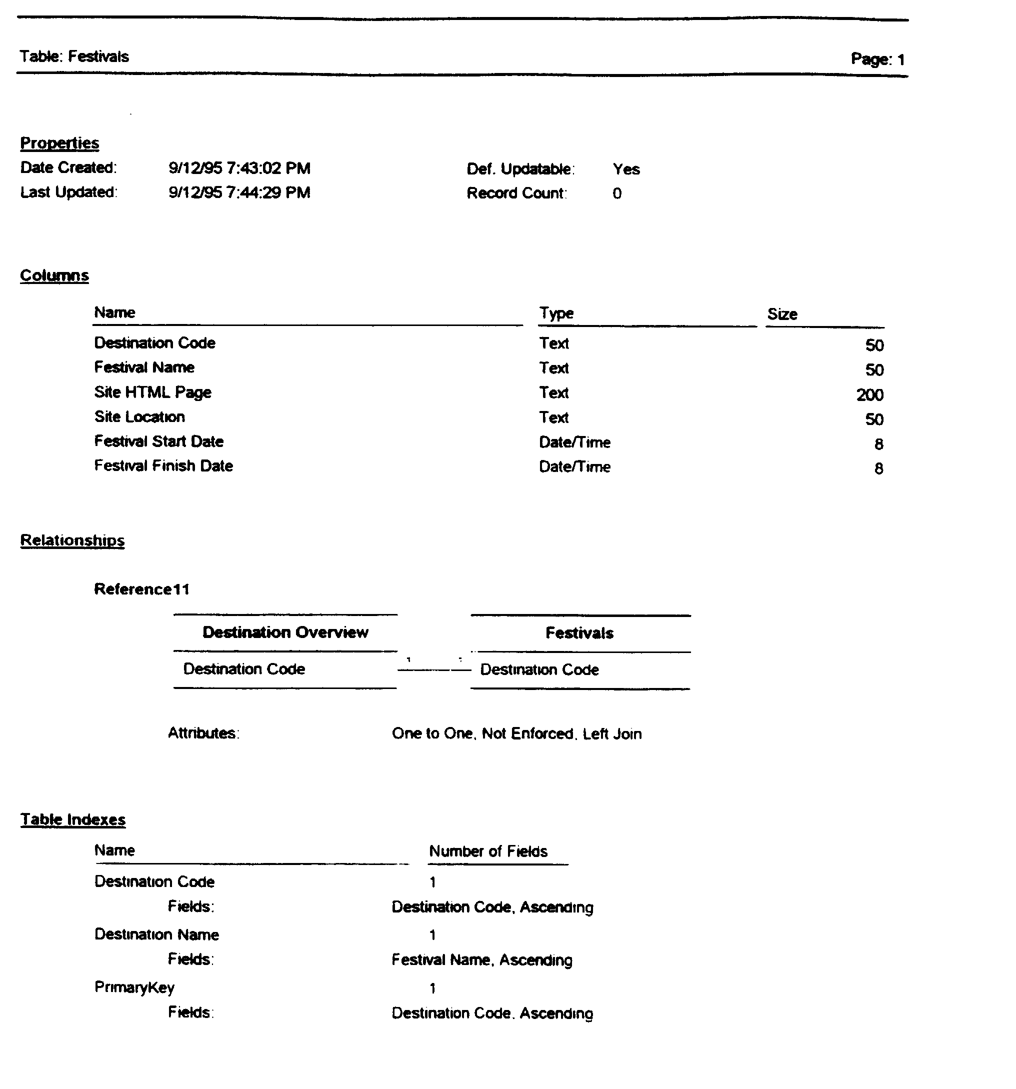

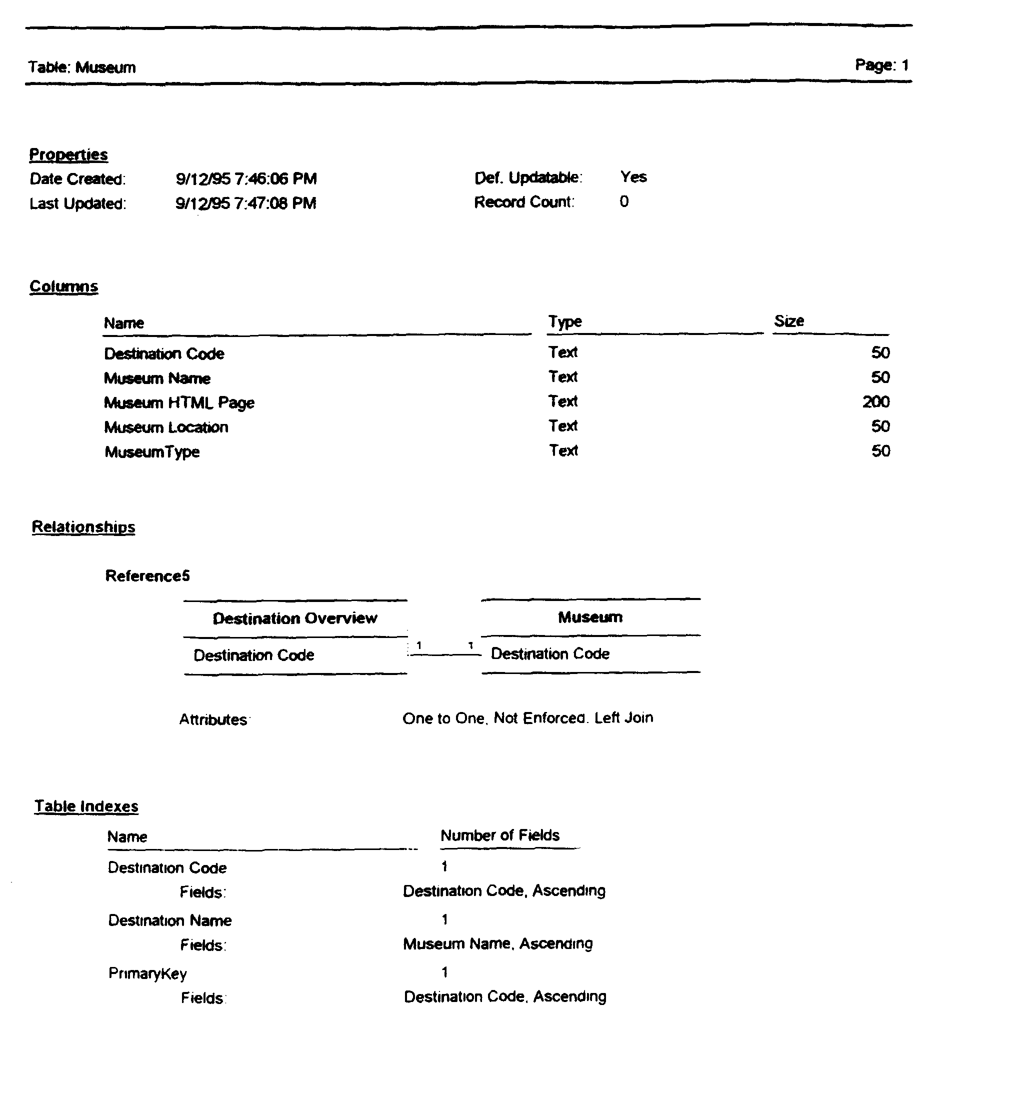

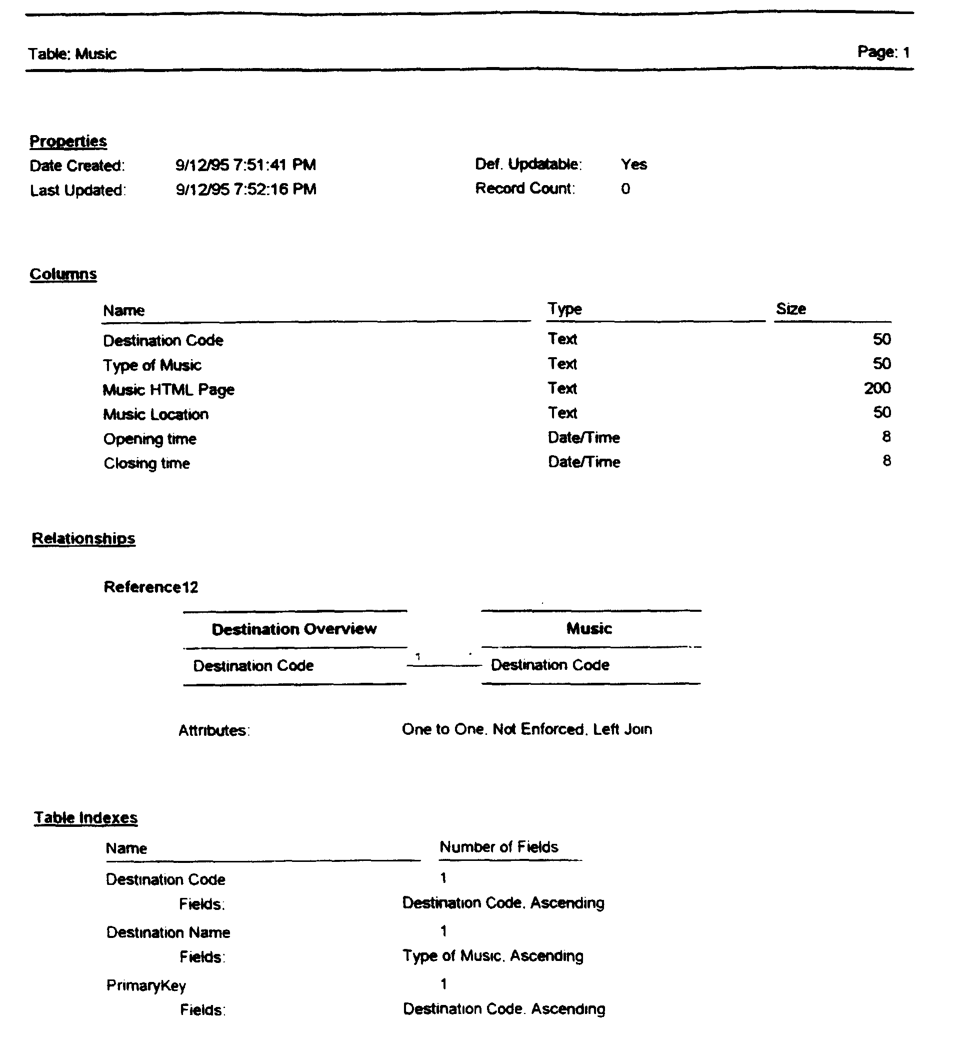

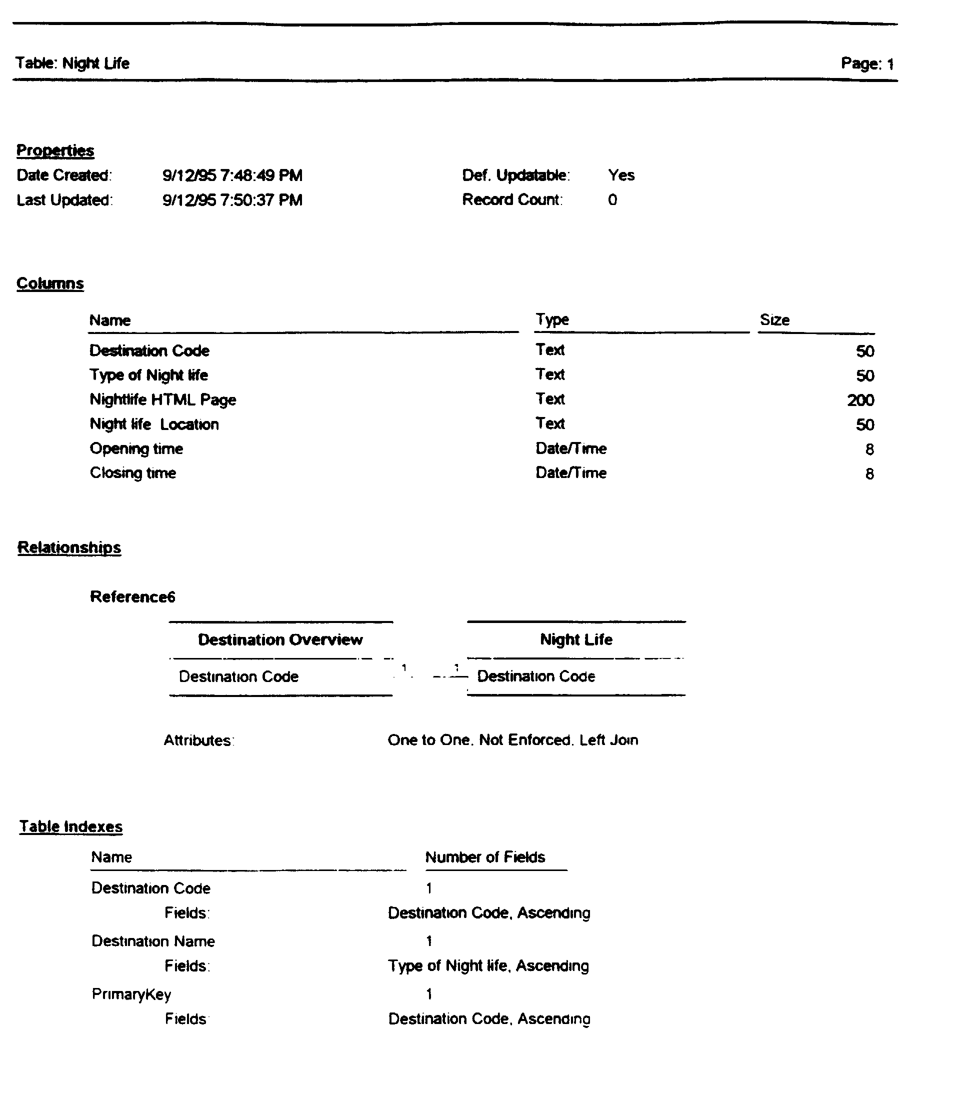

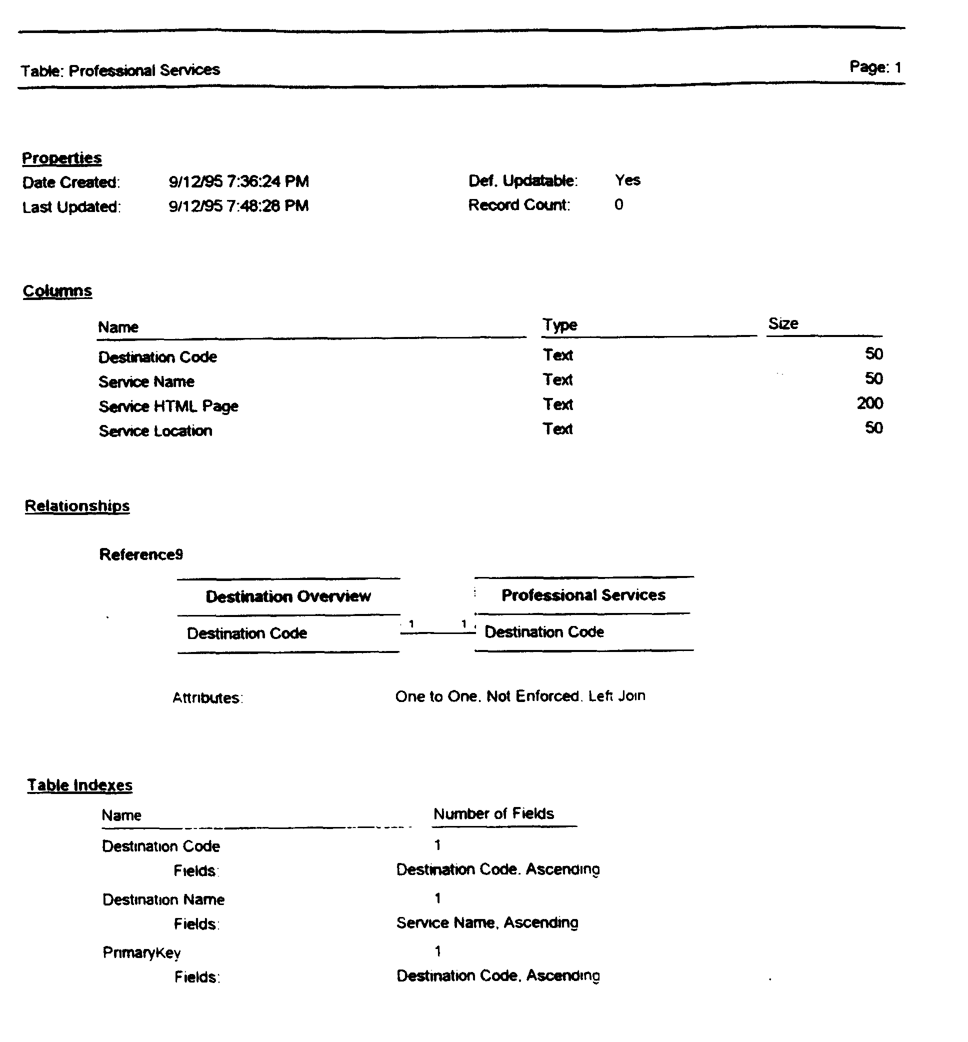

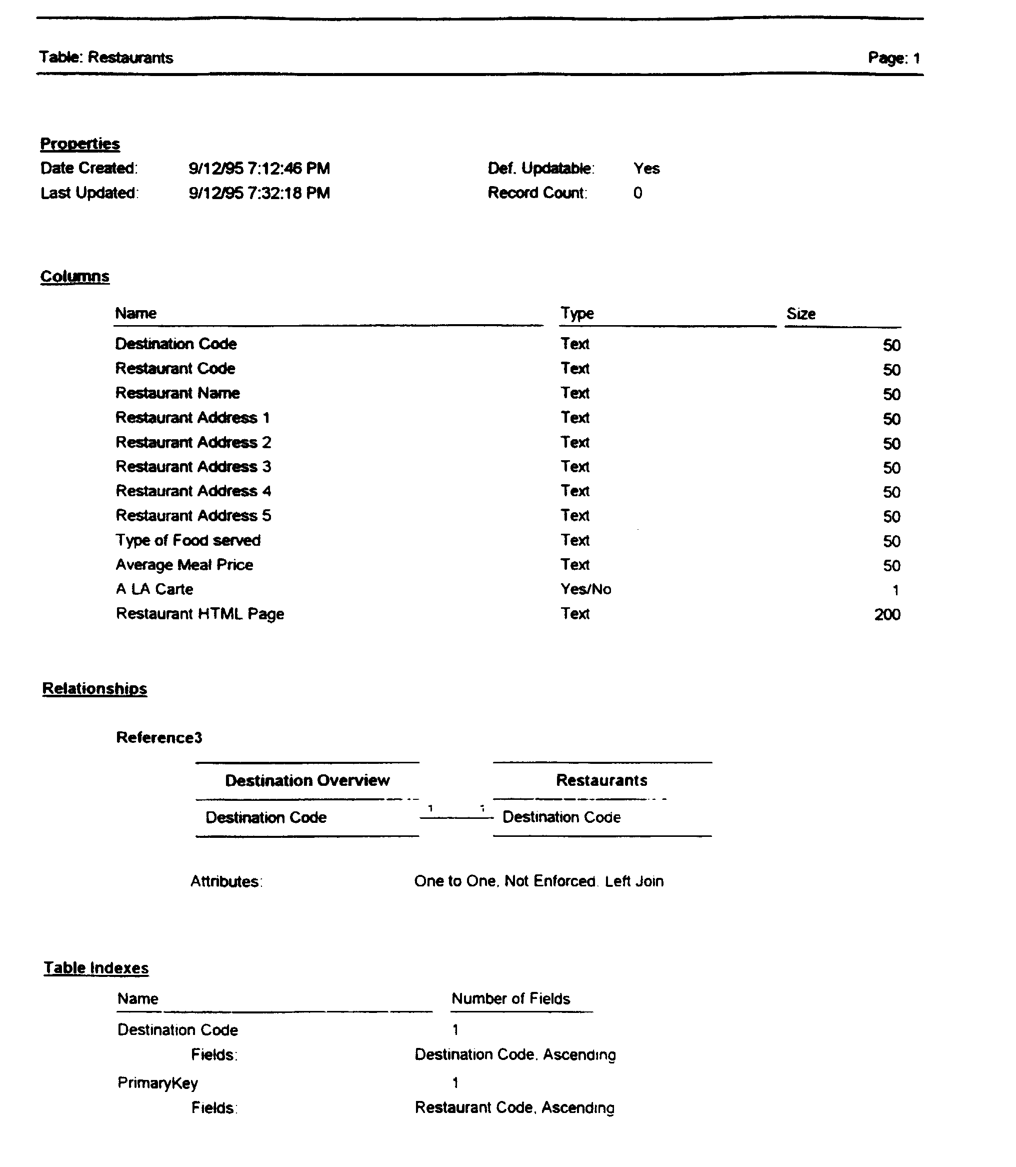

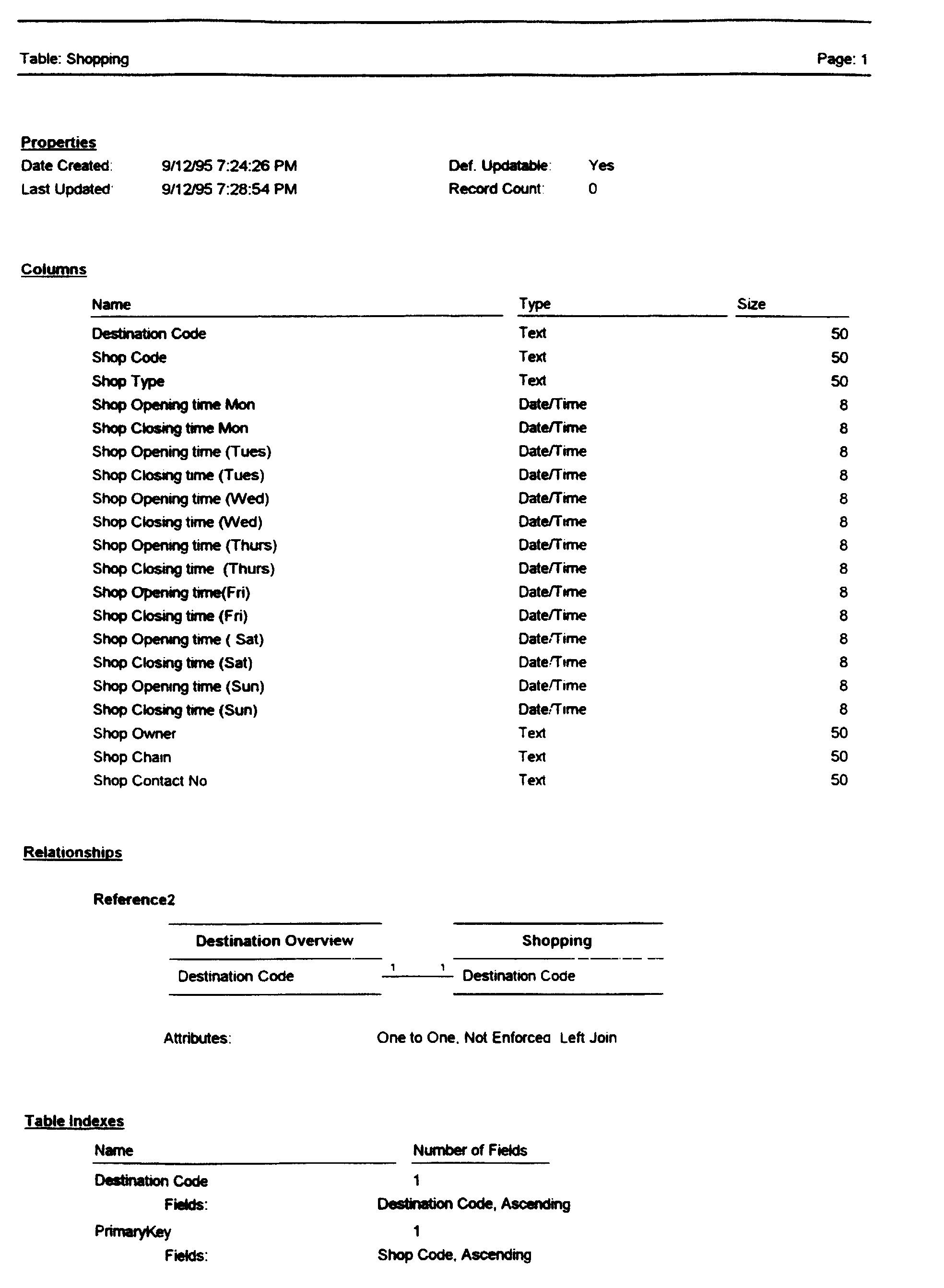

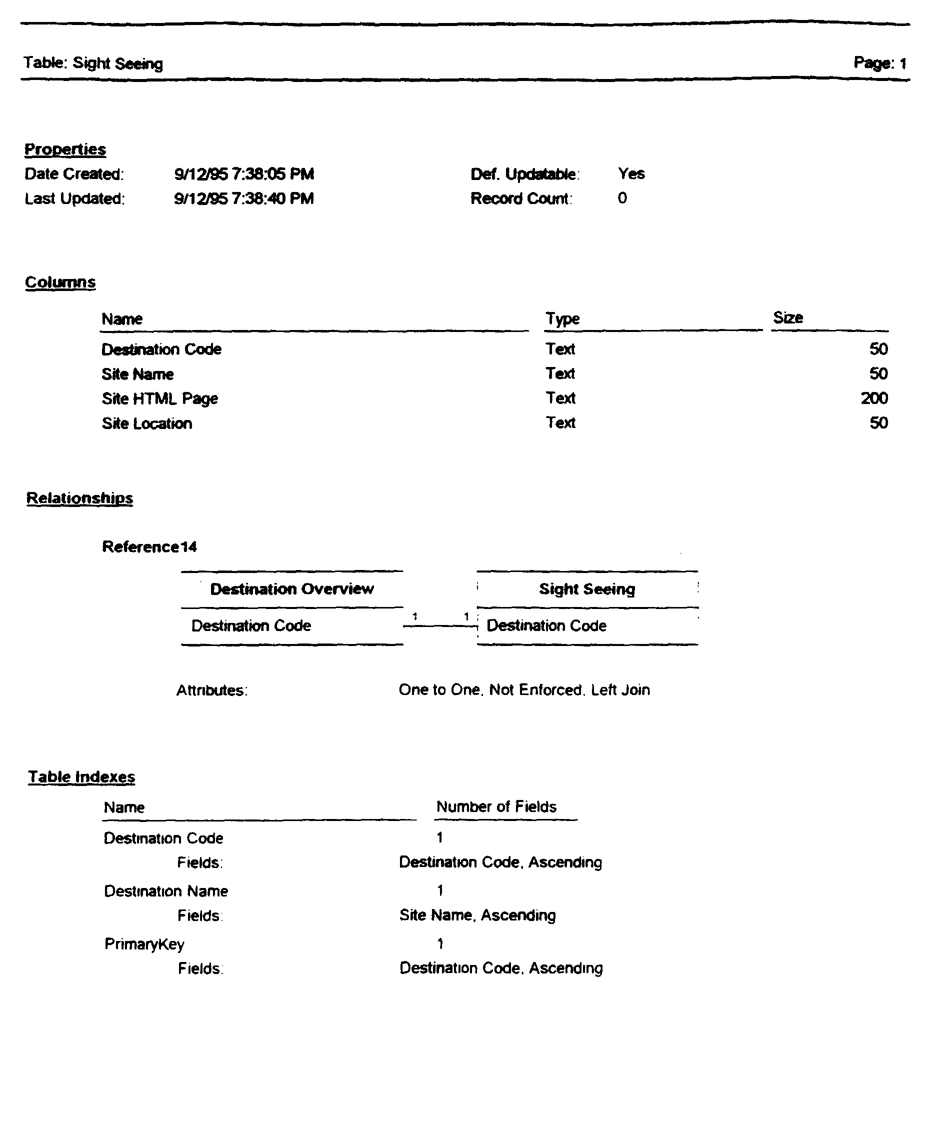

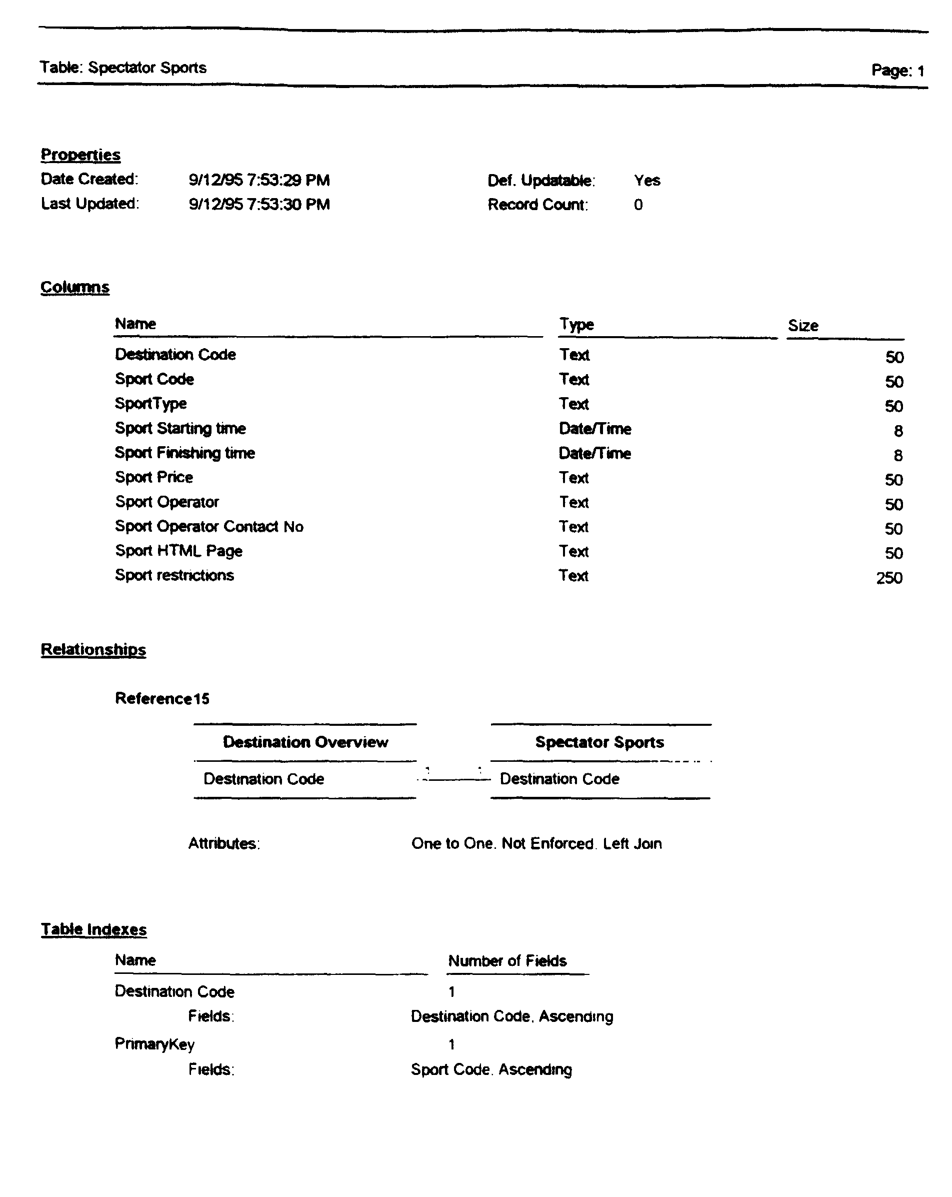

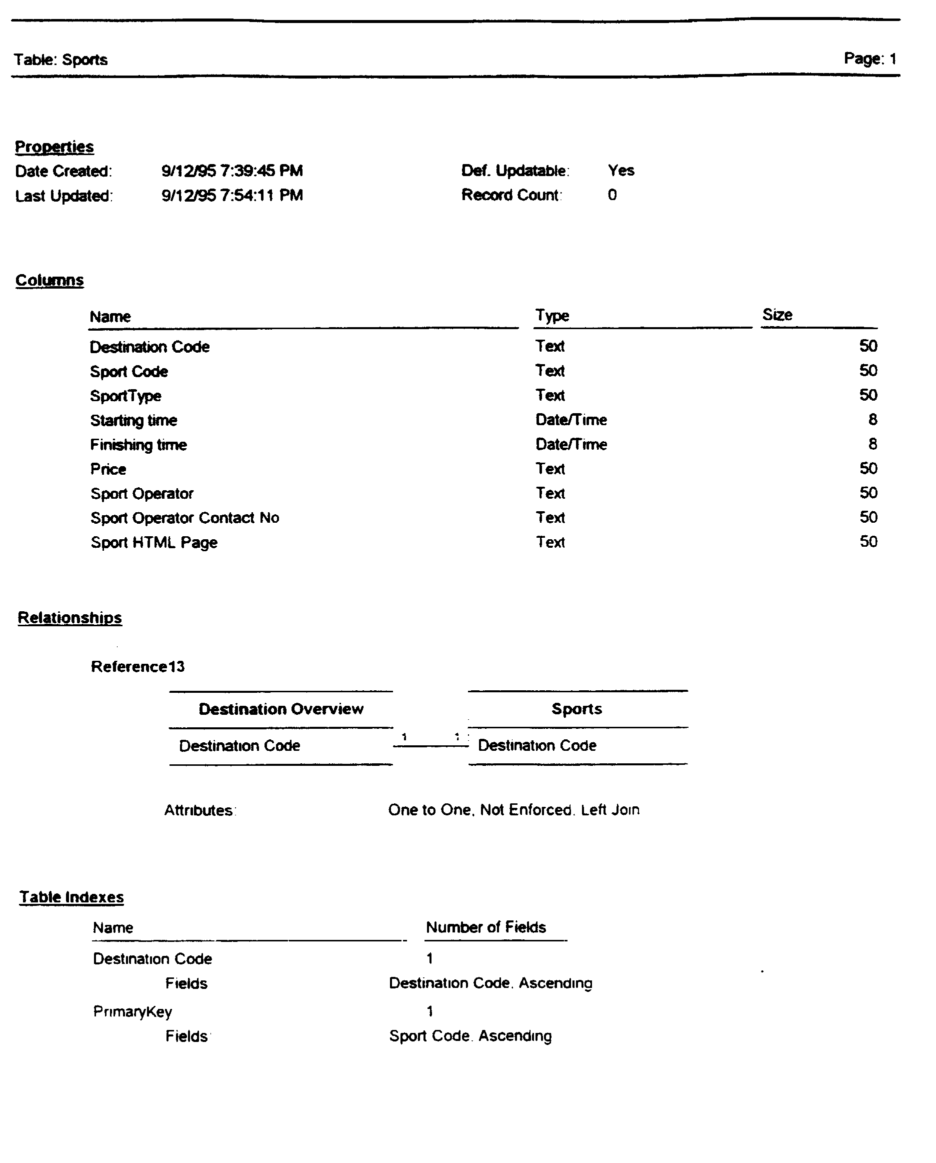

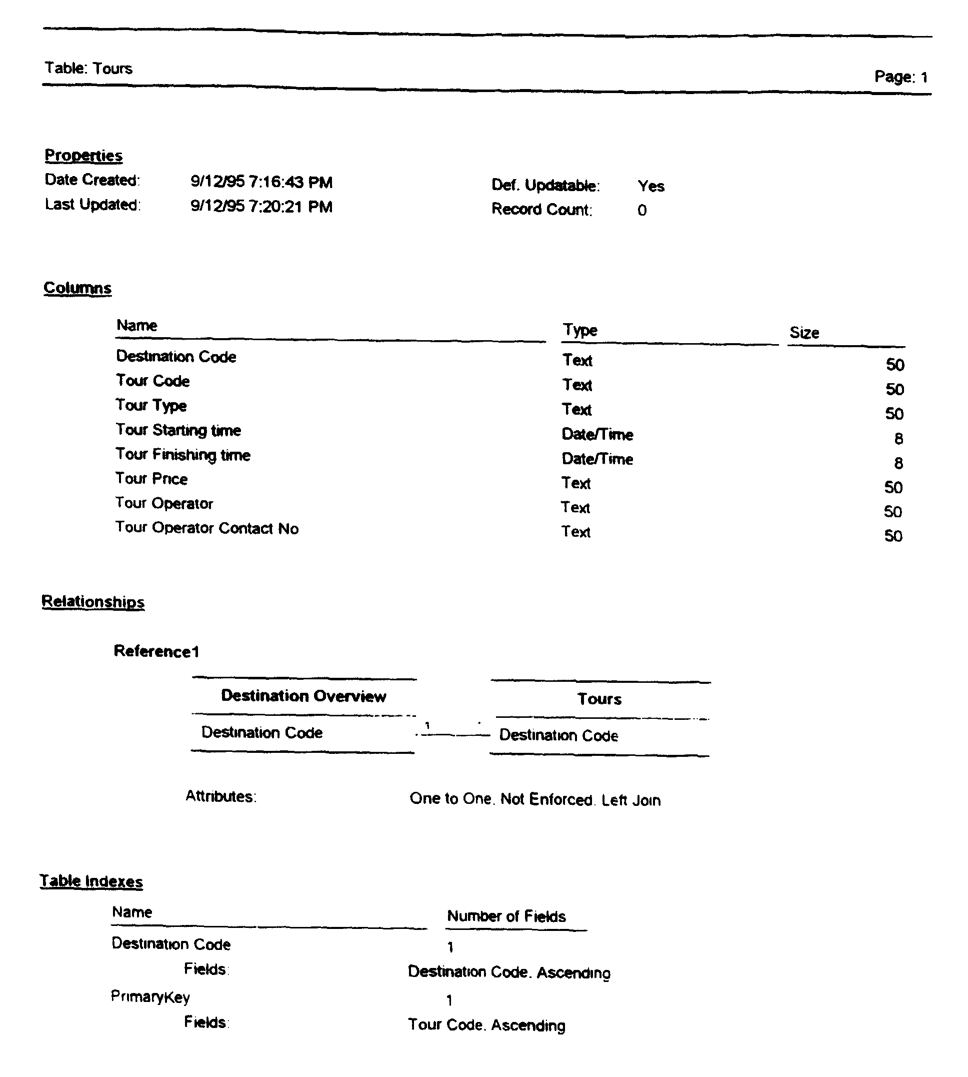

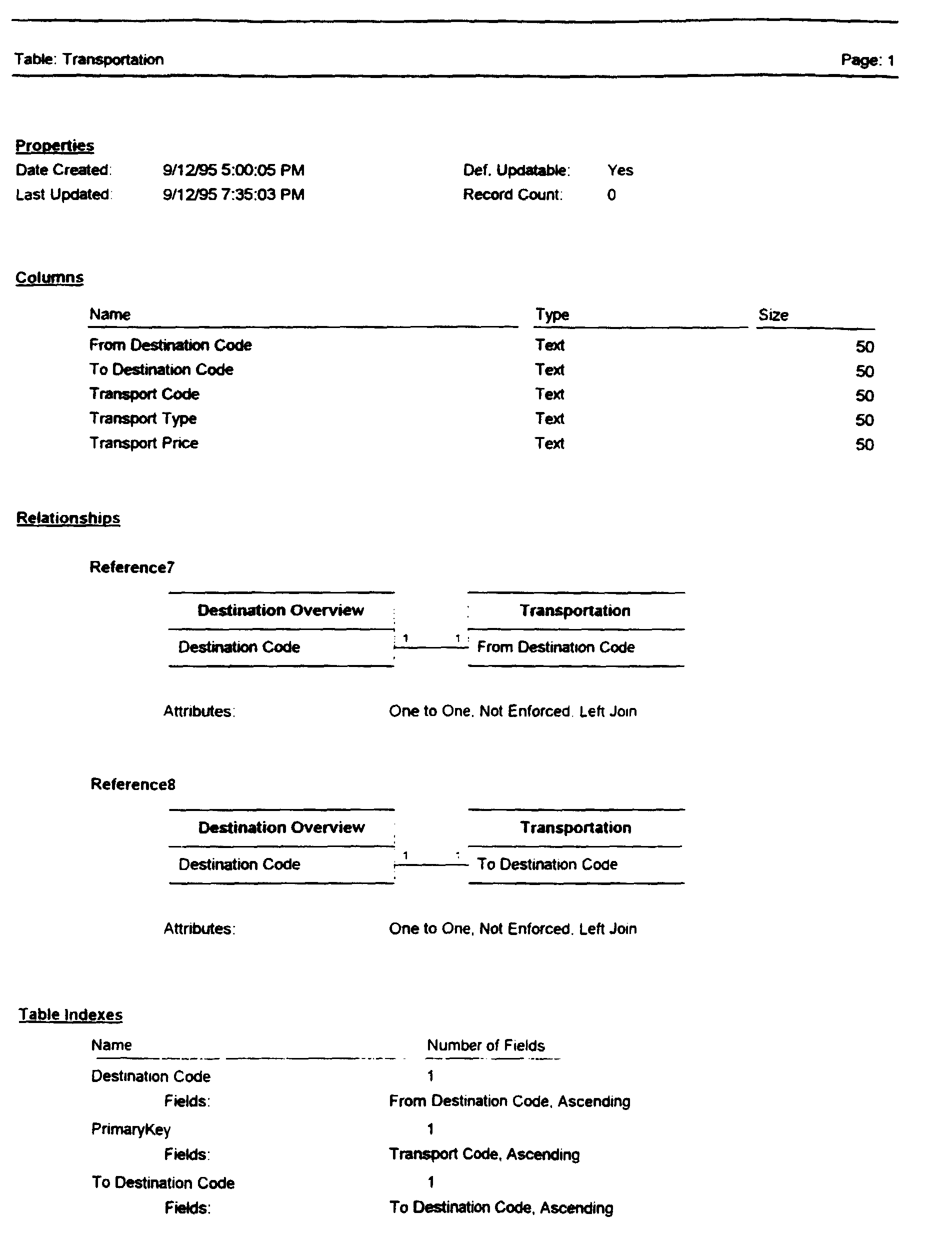

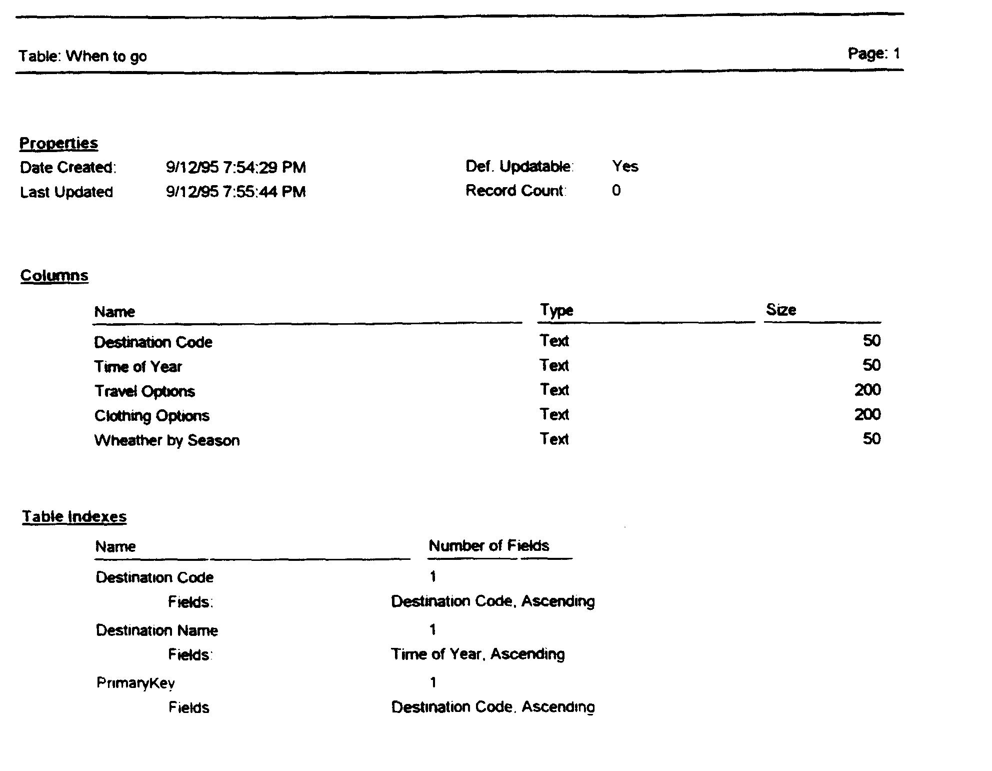

### APPENDIX B

| **Booking Packet Specification** | | | |
|---|---|---|---|
| *Some outline (proposed packet structures)* | | | |
| *All fixed length string fields have been used for simplicity, readability and ease of de-bugging-packet size and speed are not really a consideration here* | | | |

| **Booking Packet** | | | |
|---|---|---|---|
| Booking number | as | string *10 | (unique number assigned by Tourit). |
| Customer Surname | as | string *25 | |
| Customer Christian name | as | string *15 | |
| Customer Title | as | string *5 | (Mr., Mrs., Dr., Rev, Prof. etc.) |
| Requested accommodation code | as | string *8 | (first choice of accommodation) |
| Secondary accommodation code | as | string *8 | (optional second choice) |
| Roomtype required | as | string *10 | (from secondary code file up to ten |
| five rooms can | be | booked) | |
| Start date reqd | as | string *7 | (eg: 25JUN96) |
| Nights Required | as | string *2 | (eg: 02) |
| Expected Nightly room rate | as | string *7 | (eg: £90.00) - currency is indicated |
| | | | in the first character) |
| Credir Card Number | as | string *20 | (Full card (or account) number) |
| Expiry Date | as | string *5 | (eg:02/96) |
| Cardholder Name | as | string *40 | (Full name as it appears on the |
| | | | card) |
| Reserved | as | string *100 | (reserved for future expansion) |
| CRLF | as | string *2 | (CR/LF sequence for easy viewing |

| **Response Packet** | | | of the queue in EDIT etc.) |
|---|---|---|---|
| Booking number | as | string *10 | (The Tourit booking number) |
| Customer Surname | as | string *25 | (as a double-check) |
| Accommodation code | as | string *8 | (The code of the accepting hotel) |
| Acceptance | as | string *1 | (Y is yes, anything else is a no) |
| Reserved | as | string *100 | (reserved for future expansion) |
| CRLF | as | string *2 | (CR/LF sequence for easy viewing of the queue in EDIT etc.) |

### APPENDIX C

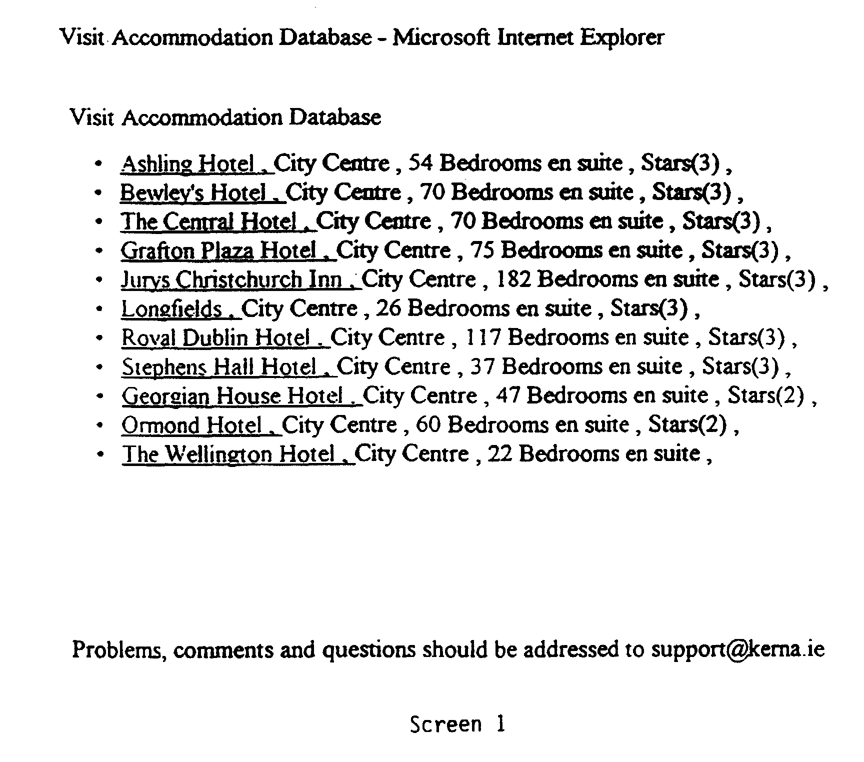

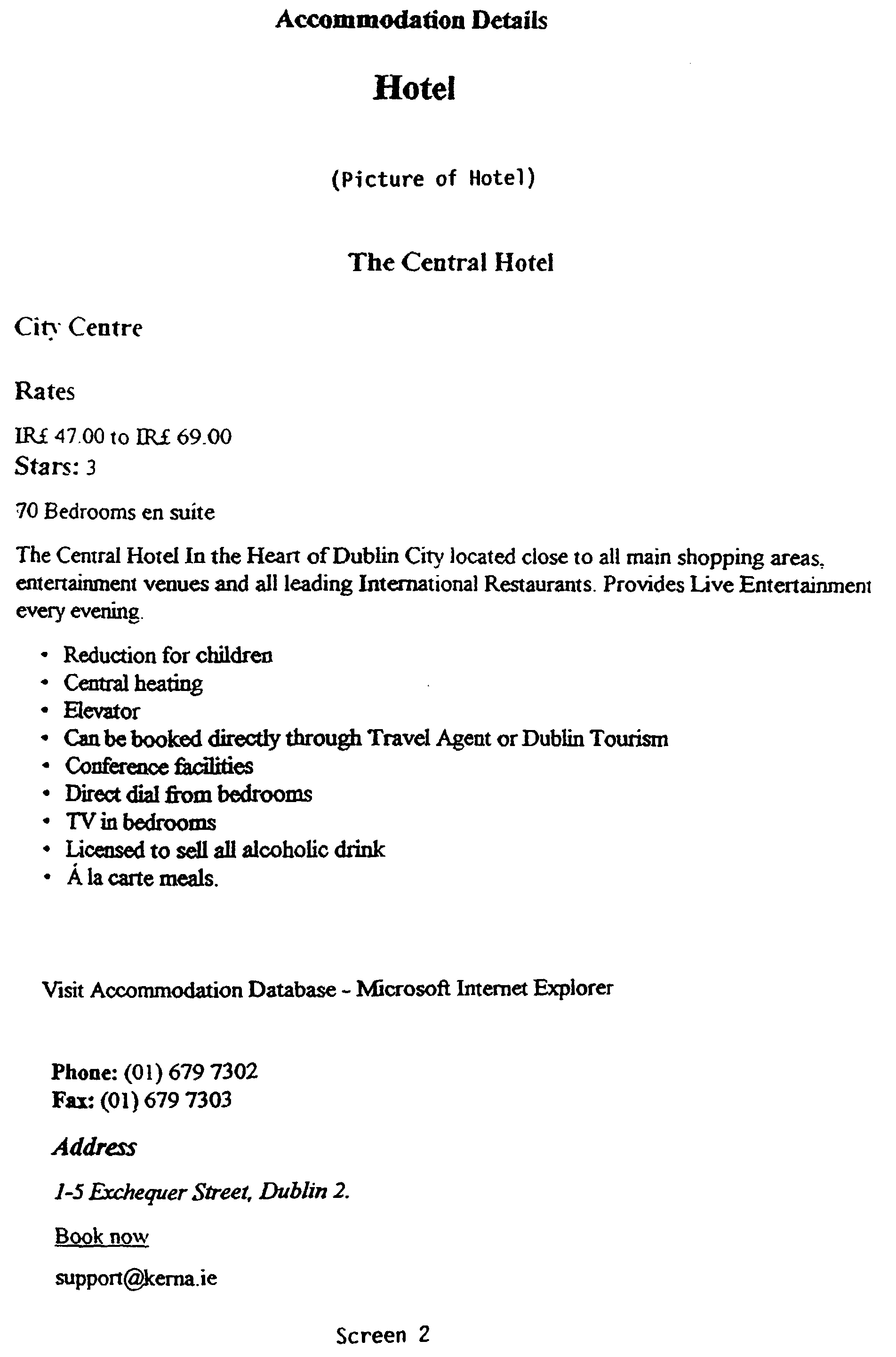

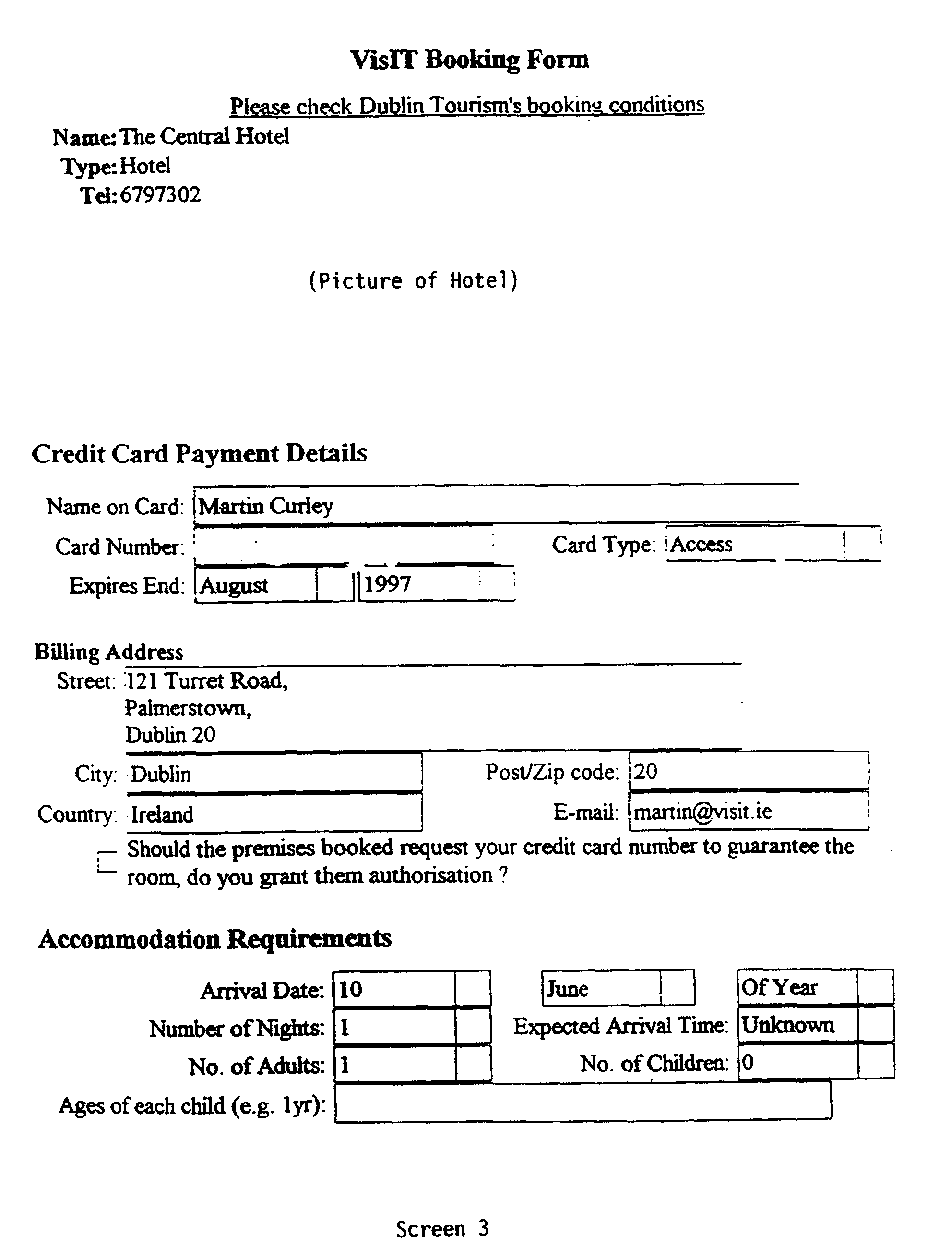

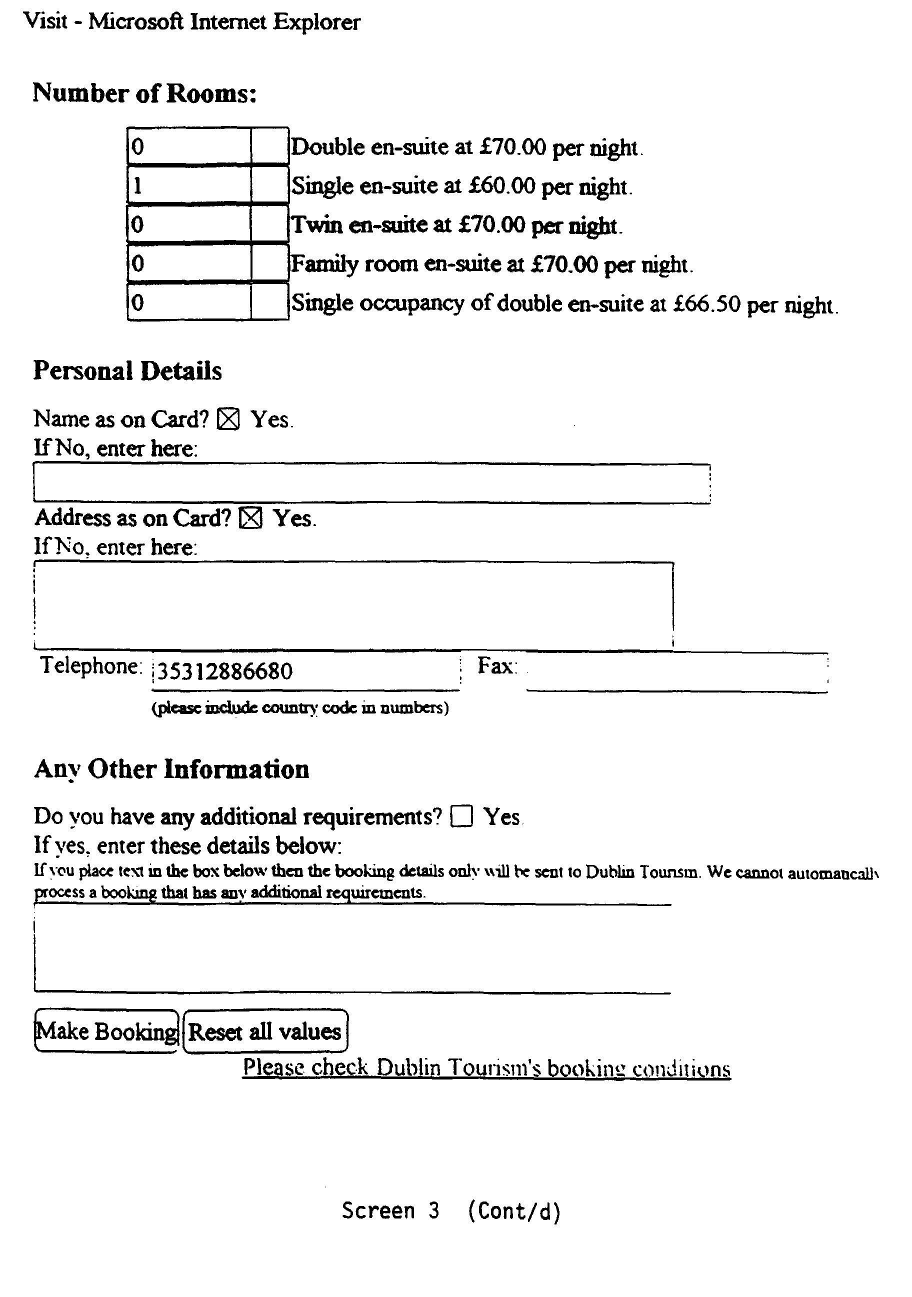

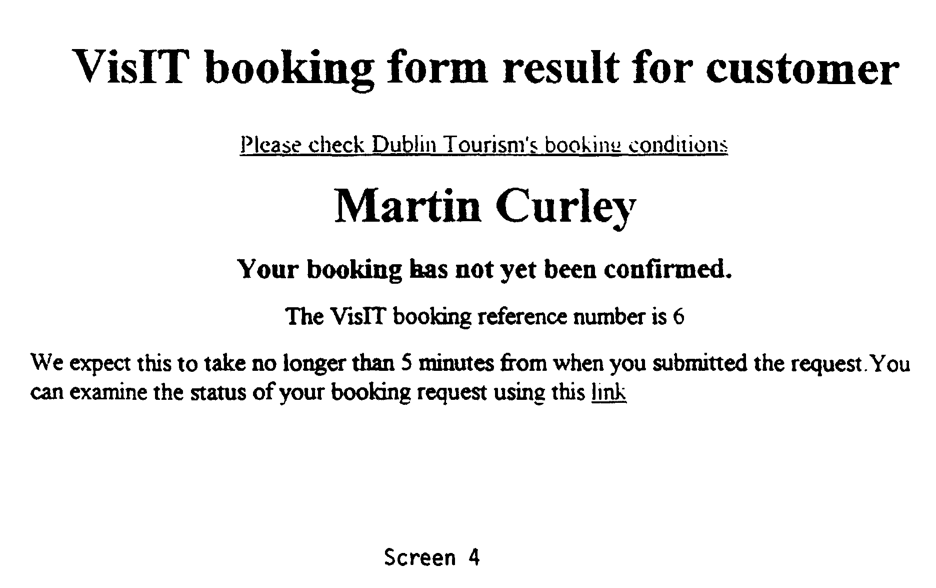

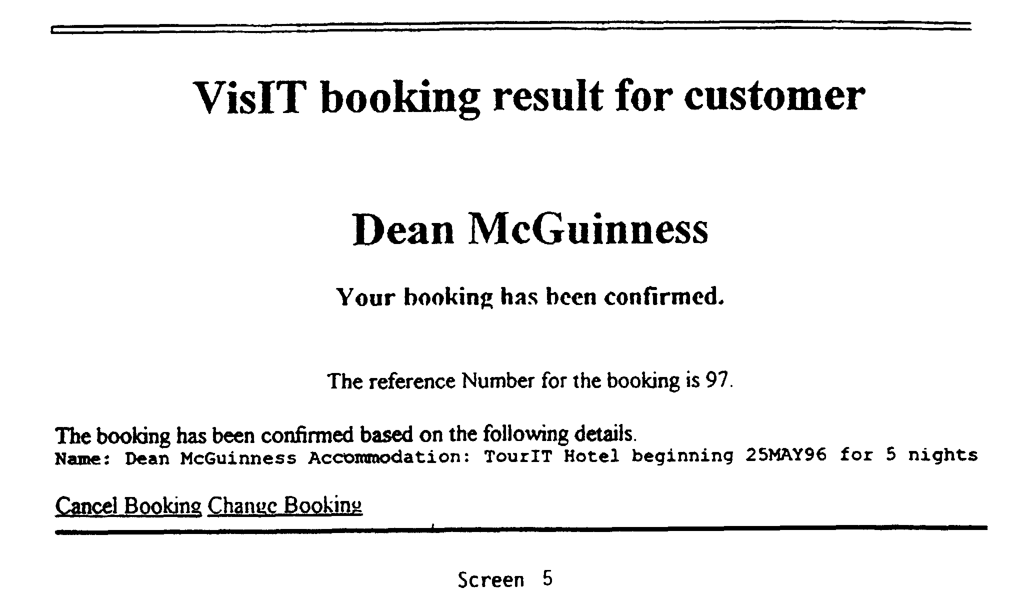

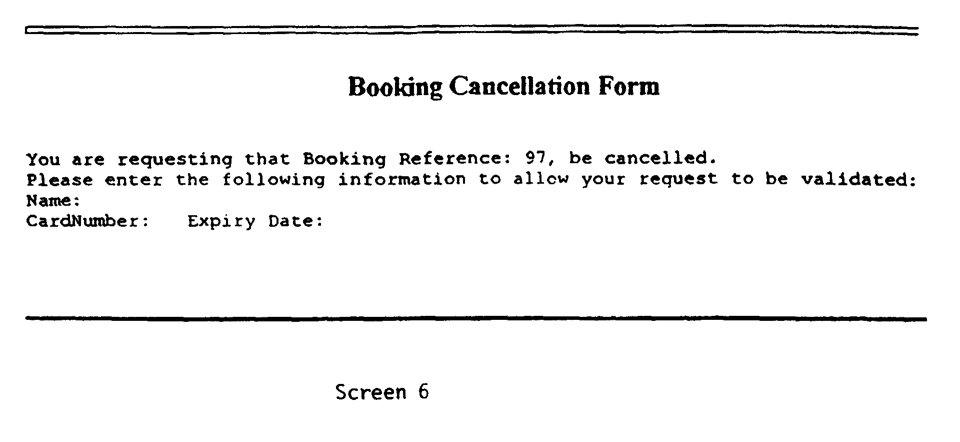

## Claims

1. An interactive remote reservation or ordering system to interactively allow reservations to be made or orders to be placed from a user location (1,2,3) with any of a large number of providers of goods and/or services at other remote locations, comprising:
- user computer terminal means for enabling a standard format request form to be completed at, and transmitted in electronic form from, said user location (1,2,3), the completed form including an identification of a particular provider of goods and/or services and/or an identification of the goods and/or services required;
- server interface means for receiving the completed request form, recognizing the goods and/or services provider identified in the form by reference to a database of registered providers, and communicating the request with the goods and/or services provider, and including electronic storage means for storing a menu of spoken messages which separately or in combination correspond to the goods and/or services which may be requested by means of the request form, and
- goods and/or services provider terminal means for receiving said request and networked so as to communicate a response to said request back to said user computer terminal means, via said server interface means,
**wherein**
- the goods and/or services provider terminal means comprises a touch tone telephone device,
- said server interface means causes the electronic storage means to generate from the menu of spoken messages an appropriate voice data message defining the request to be transmitted to the goods and/or services provider (6);
- said server interface means includes dialling means for automatically dialling the telephone device at the goods and/or services provider location identified in the said request form or identified as providing the goods and/or services required and communicating said request using said voice data message;
- said server interface means having decoding means for recognizing electronically transmitted touch tone responses to said voice data message, from a telephone device at the goods and/or services provider location, interpreting said responses, and transmitting the same to said user computer terminal means in a computer-readable format.

2. The system of Claim 1, wherein said electronic storage means is for storing a menu of spoken messages in a plurality of languages and said server interface is configured to automatically select a language appropriate to the goods and/or services provider.

3. The system of Claim 1 or Claim 2, wherein said server interface means includes a further database for storing dynamic information relating to and provided by individual goods and/or services providers (6), said further database being accessible from said user location (1,2,3) on a read only basis, and allocated segments of said database being accessible to said individual goods and/or services providers on a write basis.

4. The system of any one of Claims 1 to 3, including a further electronic storage means at said server interface for storing information provided by a system manager, configured to be accessible from said user location (1,2,3) on a read only basis and to be accessible to said system manager on a write basis.

5. An interactive remote reservation or ordering method for interactively allowing reservations to be made or orders to be placed from a user location (1,2,3) with any one of a large number of providers (6) of goods and/or services at other remote locations, comprising the steps of:
(a) generating at a user computer terminal a standard format request form, completing the form, the completed form including an identification of a particular provider (6) of goods and/or services and/or an identification of the goods and/or services required, transmitting the form in electronic form from said user location (1,2,3), to a server interface location;
(b) at the server interface, receiving the completed request form, recognizing the goods and/or services provider identified in the form by reference to a database of registered providers, storing, in electronic storage means, a menu of spoken messages which separately or in combination correspond to the goods and/or services which may be requested by means of the request form; and causing the electronic storage means to generate from the menu of spoken messages a corresponding voice data message defining the request to be transmitted to a touch tone telephone device at the goods and/or services provider (6);
(c) dialling, via dialling means, a telephone number for a goods and/or services provider (6) identified in the request form or identified as providing the goods and/or services required and transmitting the said voice data message;
(d) at the goods and/or services provider location, receiving the voice data message, and transmitting a coded touch tone response thereto,
(e) at the server interface, recognizing and decoding the electronically transmitted touch tone response from a telephone device at the goods and/or services provider location, interpreting said response, and transmitting the same to said user computer terminal in a computer-readable format.

## Patentansprüche

1. Interaktives Fernreservierungs- bzw. -bestellsystem, um es interaktiv zu ermöglichen, von einem Anwenderstandort (1, 2, 3) aus bei einem beliebigen aus einer Vielzahl von Waren- und/oder Dienstleistungsanbietern an einem anderen, entfernten Standort Reservierungen zu tätigen oder Bestellungen aufzugeben, wobei das System folgendes umfaßt:
- eine Anwender-Computerterminaleinrichtung, um das Ausfüllen eines Standardformat-Anforderungsformulars am Anwender-standort (1, 2, 3) sowie dessen Übertragen in elektronischer Form von diesem Standort aus zu ermöglichen, wobei das ausgefüllte Formular eine Identifikation eines bestimmten Waren- und/oder Dienstleistungsanbieters und/oder eine Identifikation der benötigten Waren und/oder Dienstleistungen aufweist;
- eine Server-Interfaceeinrichtung zum Empfangen des ausgefüllten Anforderungsformulars, zum Erkennen des Waren- und/oder Dienstleistungsanbieters, der in dem Formular durch Bezugnahme auf eine registrierte Anmelder enthaltende Datenbank identifiziert wird, und zur Mitteilung der Anforderung an den Waren- und/oder Dienstleistungsanbieter, wobei die Einrichtung eine elektronische Speichereinrichtung zum Speichern eines Menüs gesprochener Nachrichten aufweist, die separat oder in Kombination den Waren und/oder Dienstleistungen entsprechen, die mittels des Anforderungsformulars angefordert werden können, und
- eine Waren- und/oder Dienstleistungsanbieter-Terminaleinrichtung zum Empfangen der Anforderung, wobei die Einrichtung in einem Netzwerk angeordnet ist, um über die Server-Interfaceeinrichtung eine Antwort auf die Anforderung an die Anwender-Computerterminaleinrichtung zurück zu übertragen,
bei dem
- die Waren- und/oder Dienstleistungsanbieter-Terminaleinrichtung eine Tastaturton-Telefoneinrichtung umfaßt,
- die Server-Interfaceeinrichtung bewirkt, daß die elektronische Speichervorrichtung aus dem Menü gesprochener Nachrichten eine geeignete Stimmdatennachricht erzeugt, die die an den Waren- und/oder Dienstleistungsanbieter (6) zu übertragende Anforderung definiert;
- die Server-Interfaceeinrichtung eine Wähleinrichtung zum automatischen Anwählen der Telefoneinrichtung am Standort des Waren- und/oder Dienstleistungsanbieters, der im Anforderungsformular identifiziert wurde bzw. der als Anbieter der benötigten Waren- und/oder Dienstleistungen identifiziert wurde, und zur Mitteilung der Anforderung unter Verwendung der Stimmdatennachricht aufweist;
- wobei die Server-Interfaceeinrichtung eine Decodiereinrichtung zum Erkennen der von einer Telefoneinrichtung am Standort des Waren- und/oder Dienstleistungsanbieters aus elektronisch übertragenen Tastaturtonantworten auf die Stimmdatennachricht, zum Interpretieren der Antworten und zum Übertragen derselben an die Anwender-Computerterminaleinrichtung in einem computerlesbaren Format.

2. System nach Anspruch 1, bei dem die elektronische Speichereinrichtung dazu dient, ein Menü gesprochener Nachrichten in einer Vielzahl von Sprachen zu speichern, und bei dem die Server-lnterfaceeinrichtung konfiguriert ist, automatisch eine Sprache auszuwählen, die für den Waren- und/oder Dienstleistungsanbieter geeignet ist.

3. System nach Anspruch 1 oder 2, bei dem die Server-Interfaceeinrichtung eine weitere Datenbank zum Speichern dynamischer Informationen aufweist, die sich auf einzelne Waren- und/oder Dienstleistungsanbieter beziehen oder von diesen zur Verfügung gestellt werden, wobei vom Anwenderstandort (1, 2, 3) aus auf einer Nur-Lese-Basis auf diese weitere Datenbank zugegriffen werden kann, und wobei die einzelnen Waren- und/oder Dienstleistungsanbieter auf einer Schreib-Basis auf zugeordnete Segmente der Datenbank zugreifen können.

4. System nach einem der Ansprüche 1 bis 3, das an der Server-Interfaceeinrichtung eine weitere elektronische Speichervorrichtung zum Speichern von Informationen aufweist, die von einem Systemmanager zur Verfügung gestellt werden, wobei die Einrichtung so konfiguriert ist, daß vom Anwenderstandort (1, 2, 3) aus auf einer Nur-Lese-Basis und vom Systemmanager aus auf einer Schreib-Basis auf sie zugegriffen werden kann.

5. Interaktives Fernreservierungs- bzw. -bestellverfahren, um es interaktiv zu ermöglichen, von einem Anwenderstandort (1, 2, 3) aus bei einem beliebigen aus einer großen Anzahl von Waren- und/oder Dienstleistungsanbietern an einem anderen, entfernten Ort Reservierungen zu tätigen oder Bestellungen aufzugeben, wobei das Verfahren folgende Schritte umfaßt:
(a) Erzeugen eines Standardformat-Anforderungsformulars an einer Anwender-Computerterminaleinrichtung, Ausfüllen des Formulars, wobei das ausgefüllte Formular eine Identifikation eines bestimmten Anbieters (6) von Waren und/oder Dienstleistungen und/oder eine Identifikation der benötigten Waren und/oder Dienstleistungen aufweist, und Übertragen des Formulars in elektronischer Form von Anwender-Standort (1, 2, 3) zu einem Serverinterface-Standort;
(b) Empfangen des ausgefüllten Anforderungsformulars an der Server-Interfaceeinrichtung, Erkennen des Waren- und/oder Dienstleistungsanbieters, der in dem Formular durch Bezugnahme auf eine Datenbank registrierter Anbieter identifiziert wurde, Speichern eines Menüs gesprochener Nachrichten, die separat oder in Kombination den Waren und/oder Dienstleistungen entsprechen, die mittels des Anforderungsformulars angefordert werden können, in eine elektronische Speichereinrichtung; und Bewirken, daß die elektronische Speichervorrichtung aus dem Menü gesprochener Nachrichten eine entsprechende Stimmdatennachricht erzeugt, die die Anforderung definiert, die an eine beim Waren- und/oder Dienstleistungsanbieter (6) befindliche Tastaturton-Telefoneinrichtung übertragen werden soll;
(c) Wählen einer Telefonnumer eines Waren- und/oder Dienstleistungsanbieters (6), der im Anforderungsformular oder als Anbieter der benötigten Waren und/oder Dienstleistungen identifiziert wurde, über eine Wähleinrichtung, und Übertragen der Stimmdatennachricht;
(d) Empfangen der Stimmdatennachricht am Standort des Waren- und/oder Dienstleistungsanbieters und Übertragen einer codierten Tastaturton-Antwort dorthin;
(e) Erkennen und Decodieren der elektronisch übertragenen Tastaturton-Antwort von einer Telefoneinrichtung am Standort des Waren- und/oder Dienstleistungsanbieters, Interpretieren der Antwort und Übertragen derselben an die Anwender-Computerterminaleinrichtung in einem computerlesbaren Format.

## Revendications

1. Système interactif de réservation et de commande à distance destiné à permettre, de manière interactive, la prise de réservations ou le passage de commandes à partir d'un site d'utilisateur (1, 2, 3) avec un quelconque d'un grand nombre de fournisseurs de produits et/ou de services sur d'autres sites distants, comprenant:
un moyen formant terminal informatique d'utilisateur permettant de renseigner un formulaire de demande au format standard et de le transmettre sous forme électronique à partir dudit site d'utilisateur (1, 2, 3), le formulaire renseigné comportant une identification d'un fournisseur particulier de produits et/ou de services et/ou une identification des produits et/ou des services requis;
un moyen formant interface de serveur destiné à recevoir le formulaire de demande renseigné, à reconnaître le fournisseur de produits et/ou de services identifié sur le formulaire par référence à une base de données de fournisseurs enregistrés, et à communiquer la demande au fournisseur de produits et/ou de services, et comprenant un moyen de mémorisation électronique destiné à mémoriser un menu de messages parlés qui, de manière distincte ou en association, correspondent aux produits et/ou aux services qui peuvent être demandés au moyen du formulaire de demande, et
un moyen formant terminal de fournisseur de produits et/ou de services afin de recevoir ladite demande et agencé en réseau de manière à communiquer une réponse à ladite demande vers ledit moyen formant terminal informatique d'utilisateur, par l'intermédiaire dudit moyen d'interface de serveur,
dans lequel:
le moyen formant terminal de fournisseur de produits et/ou de services est constitué par un dispositif téléphonique à clavier,
ledit moyen d'interface de serveur amène le moyen de mémorisation électronique à produire, à partir du menu de messages parlés, un message numérique vocal approprié définissant la demande à transmettre au fournisseur de produits et/ou de services (6);
ledit moyen d'interface de serveur comprend un moyen de numérotation téléphonique destiné à appeler de manière automatique le dispositif téléphonique sur le site du fournisseur de produits et/ou de services identifié sur ledit formulaire de demande ou identifié comme fournissant les produits et/ou les services requis et à communiquer ladite demande en utilisant ledit message numérique vocal;
ledit moyen d'interface de serveur comprenant un moyen de décodage destiné à reconnaître de manière électronique des réponses audit message numérique vocal, transmises par clavier à fréquences vocales à partir d'un dispositif téléphonique sur le site du fournisseur de produits et/ou de services, à interpréter lesdites réponses et à transmettre celles-ci audit moyen formant terminal informatique d'utilisateur sous une forme pouvant être lue par l'ordinateur.

2. Dispositif selon la revendication 1, dans lequel ledit moyen de mémorisation électronique est destiné à mémoriser un menu de messages parlés en une pluralité de langues et ladite interface de serveur est configurée de manière à sélectionner automatiquement une langue appropriée pour le fournisseur de produits et/ou de services.

3. Dispositif selon la revendication 1 ou la revendication 2, dans lequel ledit moyen d'interface de serveur comprend une autre base de données destinée à mémoriser des informations dynamiques se rapportant à des fournisseurs individuels de produits et/ou de services (6), et délivrées par ces derniers, ladite autre base de données étant accessible à partir dudit site d'utilisateur (1, 2, 3) seulement en lecture, et des segments alloués de ladite base de données étant accessibles en écriture pour lesdits fournisseurs individuels de produits et/ou de services.

4. Système selon l'une quelconque des revendications 1 à 3, comprenant un autre moyen de mémorisation électronique sur ladite interface de serveur, afin de mémoriser des informations délivrées par un gestionnaire de système, configuré de manière à être accessible à partir dudit site d'utilisateur (1, 2, 3) seulement en lecture, et à être accessible en écriture pour ledit gestionnaire de système.

5. Procédé interactif de réservation et de commande à distance permettant, de manière interactive, la prise de réservations et le passage de commandes à partir d'un site d'utilisateur (1, 2, 3) avec un quelconque d'un grand nombre de fournisseurs (6) de produits et/ou de services sur d'autres sites distants, comprenant les étapes de:
(a) production, sur un terminal informatique d'utilisateur, d'un formulaire de demande au format standard, renseignement du formulaire, le formulaire renseigné comportant une identification d'un fournisseur particulier (6) de produits et/ou de services et/ou une identification des produits et/ou des services requis, transmission du formulaire sous une forme électronique à partir dudit site d'utilisateur (1, 2, 3) vers un site d'interface de serveur;
(b) à l'interface de serveur, réception du formulaire de demande renseigné, reconnaissance du fournisseur de produits et/ou de services identifié dans le formulaire par référence à une base de données de fournisseurs enregistrés, mémorisation, dans un moyen de mémorisation électronique, d'un menu de messages parlés qui, de manière distincte ou en association, correspondent aux produits et/ou aux services qui peuvent être demandés au moyen du formulaire de demande; et production par ledit moyen de mémorisation électronique, à partir dudit menu de messages parlés, d'un message numérique vocal correspondant, définissant la demande à transmettre à un dispositif téléphonique avec clavier à fréquences vocales chez le fournisseur de produits et/ou de services (6);
(c) composition, par l'intermédiaire d'un moyen de numérotation téléphonique, d'un numéro de téléphone d'un fournisseur de produits et/ou de services (6) identifié sur le formulaire de demande ou identifié comme fournissant les produits et/ou les services requis et transmission dudit message numérique vocal,
(d) sur le site du fournisseur de produits et/ou de services, réception du message numérique vocal et transmission d'une réponse codée par clavier à fréquences vocales à ce dernier;
(e) à l'interface de serveur, reconnaissance et décodage électronique de la réponse transmise par clavier à fréquences vocales à partir d'un dispositif téléphonique sur le site du fournisseur de produits et/ou de services, interprétation de ladite réponse et transmission de celle-ci audit terminal informatique d'utilisateur sous une forme pouvant être lue par l'ordinateur.
